(19) Europäisches Patentamt
European Patent Office
Office européen des brevets

(11) EP 2 921 682 B1

(12) **EUROPEAN PATENT SPECIFICATION**

(45) Date of publication and mention
of the grant of the patent:
**29.05.2019 Bulletin 2019/22**

(21) Application number: **12888583.7**

(22) Date of filing: **19.11.2012**

(51) Int Cl.:
*F02D 45/00* (2006.01)   *F01N 3/20* (2006.01)
*F02D 41/14* (2006.01)   *F02D 41/22* (2006.01)
*F02D 41/24* (2006.01)   *F02D 41/40* (2006.01)
*F02D 41/00* (2006.01)   *F02D 11/10* (2006.01)

(86) International application number:
**PCT/JP2012/079983**

(87) International publication number:
**WO 2014/076845 (22.05.2014 Gazette 2014/21)**

(54) **CONTROL DEVICE FOR INTERNAL COMBUSTION ENGINE**

STEUERUNGSVORRICHTUNG FÜR EINEN VERBRENNUNGSMOTOR

DISPOSITIF DE COMMANDE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.09.2015 Bulletin 2015/39**

(73) Proprietor: **TOYOTA JIDOSHA KABUSHIKI
KAISHA**
**Aichi-ken 471-8571 (JP)**

(72) Inventor: **AOYAGI, Shinsuke**
**Toyota-shi, Aichi-ken 471-8571 (JP)**

(74) Representative: **J A Kemp**
**14 South Square**
**Gray's Inn**
**London WC1R 5JJ (GB)**

(56) References cited:
**EP-A2- 0 974 746         WO-A1-2005/045219
DE-A1-102011 109 914   JP-A- H1 182 139
JP-A- 2004 019 629       JP-A- 2004 092 542
JP-A- 2005 120 886       JP-A- 2005 233 016
JP-A- 2009 133 285       JP-A- 2009 215 926
JP-A- 2009 216 042       JP-A- 2011 241 737
JP-A- 2012 107 607**

**Description**

**Technical Field**

The present invention relates to a control device for an internal combustion engine, and particularly relates to a control device for an internal combustion engine including a function of calculating a NOx amount in exhaust gas.

**Background Art**

As a prior art, there is known a control device for an internal combustion engine including a function of calculating the NOx amount in exhaust gas, as disclosed in Patent Literature 1 (Japanese Patent Laid-Open No. 2005-139984), for example. In the prior art, the NOx amount is calculated based on a load index value, an intake oxygen concentration, exponentiation of a fuel injection amount and a fuel injection pressure, and a highest flame temperature.

Note that the applicant recognizes the literatures described as follows including the above described literature, as the literatures relating to the present invention.

**Citation List**

Patent Literatures

> Patent Literature 1: Japanese Patent Laid-Open No. 2005-139984
> Patent Literature 2: Japanese Patent Laid-Open No. 2009-133285
> Patent Literature 3: Japanese Patent Laid-Open No. 2005-264731
> Patent Literature 4: Japanese Patent Laid-Open No. 10-252573

Another example of control device including a function of calculating the NOx amount in an exhaust gas is disclosed in DE 10 2011 109914.

**Summary of Invention**

**Technical Problem**

Incidentally, in the aforementioned prior art, as the parameters for use in calculation of the NOx amount, the load index value, the intake oxygen concentration, the fuel injection amount, the fuel injection pressure and the highest flame temperature are used. However, according to the experiment by the inventor of the present invention, it has been found out that there is a limit to accurate calculation of the NOx amount with use of the above described parameters, when the fuel injection timing changes, for example, and the calculation method has room for improvement. That is to say, according to the calculation method of the prior art, there is the problem that calculating a NOx amount with high precision is difficult depending on the operation state.

The present invention is made to address the problem as described above, and an object of the present invention is to provide a control device for an internal combustion engine capable of improving precision of calculation of a NOx amount in exhaust gas, with an influence of fuel injection timing also taken into consideration.

**Solution to Problem**

The present invention provides a control device for an internal combustion engine according to claims 1, 2 and 12.

Advantageous Effect of Invention

The configuration of calculating the NOx amount in exhaust gas based on at least two parameters composed of the exponentiation of the injection timing of the effective injection, and exponentiation of the intake oxygen concentration is adopted, and therefore, the injection timing of the effective injection which is highly correlated with the generation amount of NOx can be reflected in the calculation value of the NOx amount. Thereby, the NOx amount is accurately and stably calculated without being influenced by the model differences among the internal combustion engines, the operation situation and the like, and precision of control using the calculation value can be improved. In addition, in the first invention, only the effective injection (for example, a main injection, an after injection and a pilot injection) which has an influence on the generation amount of NOx is used in calculation of the NOx amount, and therefore, an error can be restrained from occurring to the calculation value of the NOx amount due to the state of a post injection, for example.

The average calculation means may calculate the average injection timing in which the injection timings and the injection amounts of all the effective injections by weighting the injection timing by the injection amount for each of the individual effective injections, even when the effective injection is performed a plurality of times. Thereby, the injection timings of all the effective injections can be properly reflected in the calculation value of the NOx amount, and the NOx amount at the time of multistage injection can be accurately calculated.

The main injection and the after injection may apply to the injection which injects fuel to combust the fuel in the cylinder during the time period across the compression top dead center or during the expansion stroke. Accordingly, the NOx amount calculation means can accurately calculate the NOx amount with the main injection and the after injection which have an especially large influence on the generation amount of NOx as the target, and an error can be restrained from occurring to the calculation value of the NOx amount depending on the state of the post injection, for example.

The pilot injection may apply to the fuel injection which is completed before the compression top dead center. Even when the pilot injection is dealt as the effective injection, in addition to the main injection and the after injection, the NOx amount can be accurately calculated as compared with the prior art, and a substantially similar effect as in the first invention can be obtained.

The corrected estimated A/F may be calculated based on the A/F learning correction coefficient in which the characteristic deviations of the components are reflected, and the NOx amount can be further calculated based on the corrected estimated A/F. Thereby, the mass-production variations, the characteristic deviations caused by a secular change or the like of the fresh air amount sensor and the fuel injection valve, for example, can be absorbed by the corrected estimated A/F. Accordingly, the calculation precision of the NOx amount can be kept favorable for a long period of time without being influenced by the characteristic deviations of the components.

The oxygen concentration acquiring means may calculate the intake oxygen concentration by using the A/F learning correction coefficient in which the characteristic deviations of the components are reflected. Thereby, the intake oxygen concentration can be accurately calculated while the characteristic deviations of the components are absorbed by the A/F learning correction coefficient, and therefore, the calculation precision of the NOx amount can be improved.

At the time of calculation of the intake oxygen concentration, the EGR rate also may be used as the parameter. Thereby, even when the EGR control is executed, the influence of the EGR gas can be accurately reflected in the calculation value of the intake oxygen concentration, and the calculation precision of the intake oxygen concentration can be improved.

At the time of calculation of the NOx amount, the exponentiation of the injection amount of the effective injection also may be used as the parameter. Thereby, a change of the injection amount is properly reflected in the calculation value of the NOx concentration, and the calculation precision can be further improved.

At the time of calculation of the NOx amount, exponentiation of the engine speed also may be used as the parameter. Thereby, a change of the engine speed is suitably reflected in the calculation value of the NOx concentration, and the calculation precision can be further improved.

The variable exponent means may properly change the exponent of the exponentiation to be used in calculation of the NOx amount based on the operation state of the internal combustion engine. Thereby, the calculation value of the NOx amount also can be adapted to the change of the operation state, and the calculation precision of the concentration can be further improved.

The NOx amount in the exhaust gas may be accurately calculated by the NOx amount calculation means, and therefore, the addition control means can add a suitable amount of the reducing agent in accordance with the NOx concentration without using an expensive NOx sensor or the like. Thereby, exhaust emission and fuel efficiency are improved, and reduction in cost also can be promoted.

The sensor failure detection means may detect a failure of the NOx sensor based on the calculation value of the NOx amount by the NOx amount calculation means, and the detection value of the NOx amount by the NOx sensor. Thereby, failure detection of the sensor is enabled without adding a special mechanism or the like for failure detection, and therefore reliability of the system can be improved while increase in cost is restrained.

Failures of the throttle valve and the EGR valve may be detected by using the calculation value of the NOx amount. Thereby, failure detection of the valves is enabled without adding a special mechanism or the like for failure detection, and therefore, reliability of the system can be improved while increase in cost is restrained.

The NOx amount calculation means may calculate the NOx amount in exhaust gas based on exponentiation of the intake oxygen concentration, exponentiation of the average injection timing, exponentiation of the total value obtained by totaling all the injection amounts of the effective injections, exponentiation of the engine speed, and the corrected estimated A/F. Thereby, the injection timing of the effective injection which is highly correlated with the generation amount of NOx is reflected in the calculation value of the NOx amount, and the intake oxygen concentration, the injection amount of the effective injection and a change of the engine speed also can be reflected in the calculation value. In addition, the corrected estimated A/F which absorbs the characteristic deviations of the fresh air amount sensor and the fuel injection valve is also reflected in the calculation value of the NOx amount, and therefore, the NOx amount can be accurately and stably calculated for a long time period without being influenced by these characteristic deviations.

**Brief Description of Drawings**

Figure 1 is an entire configuration diagram for explaining a system configuration of embodiment 1 of the present invention.

Figure 2 is a timing chart showing one example of multistage injection control.

Figure 3 is a characteristic diagram qualitatively showing a correlation of an injection timing of fuel and ignition delay of injected fuel.

Figure 4 is a characteristic diagram qualitatively showing a correlation of an injection timing and ignition delay, and a cylinder capacity at a time of combustion.

Figure 5 is a characteristic diagram qualitatively showing a correlation of the injection timing and the ignition delay, and a NOx concentration in exhaust gas.

Figure 6 is a flowchart showing one example of control that is executed by an ECU in embodiment 1 of the present invention.

Figure 7 is an explanatory view for explaining control of changing an exponent of exponentiation that is used in calculation of a NOx concentration at each operation region, in embodiment 2 of the present invention.

Figure 8 is an entire configuration diagram for explaining a system configuration of embodiment 3 of the present invention.

Figure 9 is a flowchart showing one example of control that is executed by an ECU, in embodiment 3 of the present invention.

Figure 10 is a flowchart showing one example of control that is executed by an ECU, in embodiment 4 of the present invention.

Description of Embodiment

Embodiment 1

[Configuration of embodiment 1]

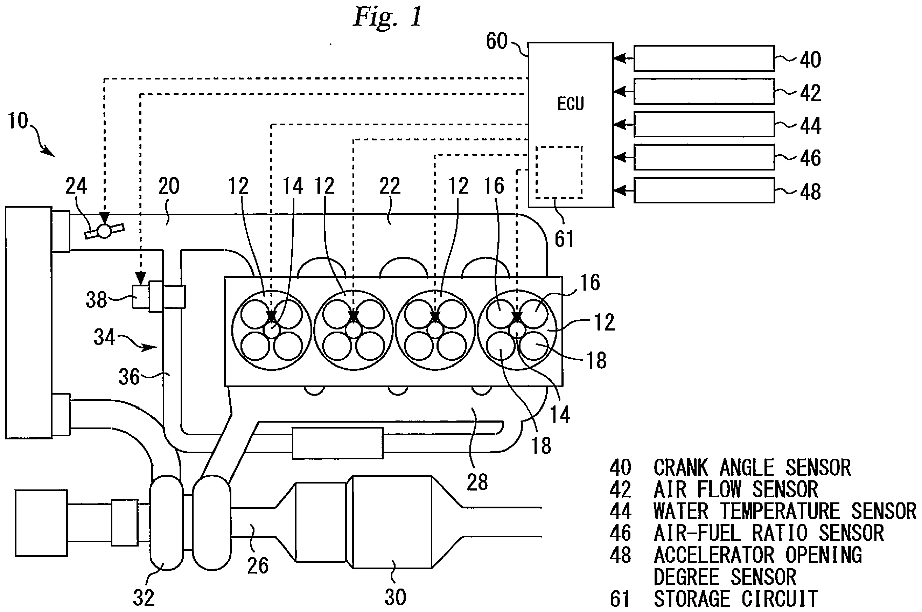

Hereinafter, embodiment 1 of the present invention will be described with reference to Figure 1 to Figure 6. Figure 1 is an entire configuration diagram for explaining a system configuration of embodiment 1 of the present invention. A system of the present embodiment includes an engine 10 as an internal combustion engine constructed of a diesel engine, for example. Note that in Figure 1, a four-cylinder engine is illustrated, but the present invention is not limited to this, and is applied to an internal combustion engine with an optional number of cylinders. In each of the cylinders of the engine 10, a combustion chamber 12 is formed by a piston not illustrated, and the piston is connected to a crankshaft that is an output shaft of the engine 10. Further, each of the cylinders includes a fuel injection valve 14 that injects fuel into a combustion chamber 12 (into the cylinder), an intake valve 16 that opens and closes an intake port that is opened into the cylinder, and an exhaust valve 18 that opens and closes an exhaust port that is opened into the cylinder.

Further, the engine 10 includes an intake passage 20 that takes air into the respective cylinders, and a downstream side of the intake passage 20 is constructed of an intake manifold 22 that is connected to intake ports of the respective cylinders. An electronically controlled throttle valve 24 that regulates an amount of fresh air (an intake air amount) that is taken into the respective cylinders via the intake passage 20 is provided in the intake passage 20. Further, the engine 10 includes an exhaust passage 26 to which exhaust gas is discharged from the respective cylinders, and an upstream side of the exhaust passage 26 is constructed of an exhaust manifold 28 that is connected to exhaust ports of the respective cylinders.

In the exhaust passage 26, a NOx reduction catalyst 30 is provided. The NOx reduction catalyst 30 is composed of, for example, urea SCR (Selective Catalytic Reduction), HC-SCR or the like, and reduces and purifies NOx in exhaust gas by using fuel or a urea solution as a reducing agent. Note that the NOx reduction catalyst 30 may be disposed by being combined with a purifier that purifies the other components in exhaust gas. As the purifier like this, for example, a three-way catalyst, a DPF (Diesel Particulate Filter) and the like can be cited.

Meanwhile, the engine 10 includes a turbocharger 32 that supercharges intake air by using an exhaust pressure, and an EGR mechanism 34 that recirculates part of exhaust gas to the intake system. The EGR mechanism 34 includes an EGR pipe 36 that connects the intake passage 20 and the exhaust manifold 28, and an EGR valve 38 that regulates a recirculation amount of the exhaust gas (EGR gas) which recirculates from the exhaust manifold 28 to the intake passage 20 via the EGR pipe 36. Note that the present invention may be applied to the engine which is not loaded with the turbocharger 32 and the EGR mechanism 34.

Next, a control system of the engine 10 will be described. The system of the present embodiment includes a sensor system including various sensors that are necessary for control of the engine 10 and a vehicle loaded with the engine 10, and an ECU (Electronic Control Unit) 60 that controls an operation state of the engine 10. Explaining the sensor system first, a crank angle sensor 40 outputs a signal corresponding to rotation of a crankshaft, and an air flow sensor 42 configures a fresh air amount sensor that detects an intake air amount (a fresh air amount). A water temperature sensor 44 detects a cooling water temperature of the engine, an air-fuel ratio sensor 46 detects an exhaust air-fuel ratio as a continuous value, an accelerator opening degree sensor 48 detects an accelerator operation amount of an operator. The sensor system also includes various sensors other than the above sensors.

The ECU 60 is configured by a microcomputer, for example, and includes a storage circuit 61 constituted of a ROM, a RAM, a nonvolatile memory and the like, and an arithmetic processing unit that performs arithmetic processing based on a program stored in the storage circuit 61, and a plurality of input and output ports. The respective sensors of the sensor system are individually connected to an input side of the ECU 60. Various actuators including the fuel injection valve 14, the throttle valve 24, the EGR valve 38 and the like are individually connected to an output side of the ECU 60. Further, the storage circuit 61 includes map data (a learning map) in which an A/F learning correction coefficient that will be described later is stored for each operation region, and configures learning storage means.

The ECU 60 performs operation control by driving the respective actuators based on operation information of the engine that is detected by the sensor system. Citing a specific example, the ECU 60 detects a speed of the engine and the crank angle based on output from the crank angle sensor 40, and determines a total fuel injection amount based on the intake air amount, the accelerator operation amount and the like. The ECU 60 sets a number of times of fuel injection in one cycle, and an injection amount and an injection timing of each fuel injection, based on the total fuel injection amount, the engine speed and the like, and drives the fuel injection valve 14 every time the set injection timing arrives. As above, in the present embodiment, a structure may be adopted, which executes multistage injection control that will be described later by executing a fuel injection a plurality of times in one cycle. The fuel that is injected by fuel injections other than a post injection that will be described later is compressed in the cylinders, and thereby spontaneously ignites in a vicinity of a compression top dead center to operate the engine.

Further, in order to enhance purification efficiency of exhaust gas, the ECU 60 executes air-fuel ratio feedback control and air-fuel ratio learning control. The air-fuel ratio feedback control performs feedback control of the fuel injection amount based on the exhaust air-fuel ratio which is detected by the air-fuel ratio sensor 46, and controls the exhaust air-fuel ratio to be within a predetermined range that is suitable for purification of the exhaust gas. Further, the air-fuel ratio learning control is control of calculating an A/F learning correction coefficient in which characteristic deviations of components are reflected is calculated for each operation region as described later, and storing the A/F learning correction coefficient of each operation region in the learning map in the storage circuit 61. Note that the operation region is set based on the engine speed and the intake air amount (or the fuel injection amount), for example. The A/F learning correction coefficient which is stored as above is read from the learning map in response to the operation region at a present time point, and is used as a correction factor of the fuel injection amount, in the injection control, for example. Meanwhile, the ECU 60 executes EGR control of controlling the amount of the EGR gas (the EGR amount) which flows into the cylinders by regulating an opening degree of the EGR valve 38 in accordance with the operation state of the engine.

Next, control relating to NOx in the exhaust gas will be described. In order to enhance the reduction efficiency of NOx by the NOx reduction catalyst 30, the ECU 60 executes NOx amount calculation control and reducing agent addition control. In the NOx amount calculation control, the ECU 60 calculates the NOx amount in the exhaust gas, while considering an influence of multistage injection control. Further, in the reducing agent addition control, the ECU 60 controls the addition amount of the reducing agent which is added to the NOx reduction catalyst 30, based on the NOx amount which is calculated by the NOx amount calculation control. Hereinafter, the multistage injection control and the NOx amount calculation control according to the present embodiment will be described. Note that in the following explanation, the case of calculating the NOx concentration [ppm] as the NOx amount will be exemplified.

(Multistage injection control)

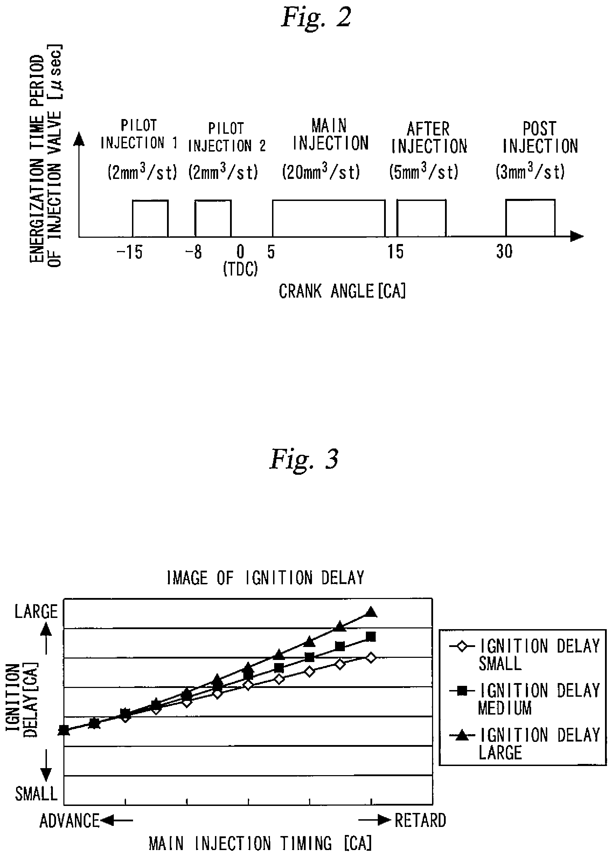

Figure 2 is a timing chart showing one example of the multistage injection control. In the drawing, a case of performing fuel an injection five times during one cycle, that is, the case of performing a main injection, an after injection, two times of a pilot injection, and a post injection is exemplified. A numeral (mm$^3$/st) that is written at a lower side of each of the injection names shows one example of the injection amount of the injection. Further, the crank angle in Figure 2 is described with a compression top dead center TDC as a reference (O[CA]).

The main injection is a main fuel injection for generating torque, and is executed during a time period across the compression top dead center, or an expansion stroke. Describing more specifically, in a middle/low speed region where the engine speed is not so high, for example, the main injection is executed at a first half of an expansion time period, but in a high speed region, part of the main injection sometimes spans a time period (for example, -2 to 3 [CA]) before the compression top dead center. The after injection is a fuel injection for generating torque similarly to the main injection, and is executed at a time interval from the main injection, in the expansion stroke. The after injection makes a mixed state of the cylinder gas and the fuel uniform, and improves combustibility by injecting the fuel into a space after the injected fuel by the main injection is moved by a gas flow in the cylinder.

Meanwhile, the pilot injection injects fuel prior to the main injection and the after injection, and preheats the insides of the cylinders up to a temperature suitable for combustion, in order to enhance combustibility of the fuel which is injected by the main injection and the after injection. In the pilot injection, a smaller amount of fuel as compared with those of the main injection and the after injection is injected during a compression stroke, and completes the injection before the compression top dead center. Note that the fuel which is injected by the pilot injection slightly contributes to combustion in the cylinders and generation of torque.

In regard to the above, the post injection injects a smaller amount of fuel as compared with those of the main injection and the after injection, and supplies the fuel to the exhaust passage 26 as unburned fuel. Therefore, the fuel which is injected by the post injection hardly contributes to combustion in the cylinders and generation of torque. The post injection is executed to coincide with a timing close to an exhaust stroke after the end of combustion, more preferably, a valve opening timing of the exhaust valve 18. The unburned fuel which is generated by the post injection is added to the NOx reduction catalyst 30 as the reducing agent, and is used in combustion of particulate matter that is collected by a DPF.

Among the main injection, the after injection, the pilot injection and the post injection which are described above, the fuel injections which significantly contribute to the combustion in the cylinders, that is, the fuel injections which generate torque are the main injection and the after injection. As will be described above, a generation amount of NOx is significantly influenced by the injection timing of the fuel injection which generates torque. Therefore, in the following explanation, the main injection and the after injection will be generically described as "an effective injection", and the pilot injection is not included in the effective injection. Note that the pilot injection slightly contributes to the combustion in the cylinders and generation of torque, and therefore, in the present invention, a structure including the pilot injection in the effective injection may be adopted. The structure will be described later.

(NOx amount calculation control)

NOx is mainly generated when the fuel injected by the effective injection is burned. At the time of the combustion which generates torque, a flame temperature becomes high, and therefore, generation of NOx is promoted. Meanwhile, even when the injection amount of the effective injection is fixed, if the injection timing is delayed, a cylinder capacity at a time of combustion increases, whereby an oxygen density in the cylinders is reduced and a combustion reaction speed becomes low. As a result, the highest flame temperature in the cylinders is reduced, and the generation amount of NOx is reduced. Accordingly, the generation amount of NOx reduces more as the injection timing is delayed more.

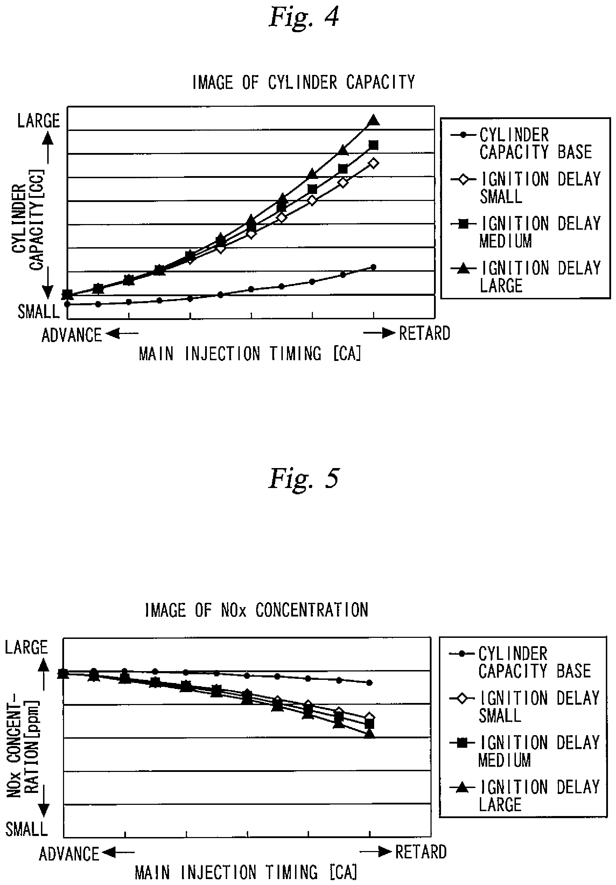

Figure 3 to Figure 5 are explanatory views for explaining correlations of the NOx concentration and the injection timing. Describing the drawings in more detail, Figure 3 is a characteristic diagram qualitatively showing a correlation of the injection timing of fuel and ignition delay of the injected fuel, Figure 4 is a characteristic diagram qualitatively showing a correlation of the fuel timing and ignition delay, and the cylinder capacity at the time of combustion. Further, Figure 5 is a characteristic diagram qualitatively showing a correlation of the injection timing and the ignition delay, and the NOx concentration in the exhaust gas. Note that in these drawings, the fuel timing of the main injection is illustrated as the injection timing. Hereinafter, the correlation of the NOx concentration and the injection timing will be described with reference to Figure 3 and Figure 5.

First, the cylinder capacity at the time of combustion can be considered as a function of the injection timing of the fuel when seen qualitatively. Further, the ignition delay of the injected fuel also can be considered as the function of the injection timing, and changes with a characteristic that forms a convex shape downward to the injection timing, as shown in Figure 3. With these characteristics taken into consideration, the cylinder capacity at the time of combustion is considered to change as shown in Figure 4 in accordance with the injection timing and the ignition delay. Further, since the NOx concentration in the exhaust gas tends to increase more as the cylinder capacity at the time of combustion is larger, a correlation corresponding to the tendency is assumed to be present between both the NOx concentration and the cylinder capacity, and when characteristic lines shown in Figure 4 are vertically inversed, characteristic lines shown in Figure 5 can be obtained.

That is to say, it is considered that the cylinder capacity at the time of combustion with ignition delay taken into consideration influences the generation amount of NOx, and the cylinder capacity and ignition delay correlate with the injection timing as described above, and therefore it is conceivable that a high correlation is present between the NOx concentration and the fuel timing. According to the inventor of the present application, a characteristic is found out, in which as the injection timing is delayed more, and ignition delay becomes larger, the NOx concentration decreases as it forms a convex shape upward, and the characteristic also can be confirmed by an experiment.

Further, the NOx concentration tends to decrease if the fuel injection is performed by being divided into the main injection and the after injection. That is to say, as compared with the case with only the main injection, an injection ratio in a state in which the cylinder capacity is increased (a state in which the piston is lowered) increases in a process of the combustion advancing, when the main injection and the after injection are performed. As a result, an operation occurs, which is similar to the case in which the injection timing is delayed and only the main injection is executed, and the NOx concentration reduces. Accordingly, when the NOx concentration is calculated, an influence of not only the main injection, but also the after injection needs to be taken into consideration. The inventor of the present application has found out that when the influence of a plurality of times of effective injection is taken into consideration, the NOx concentration can be precisely calculated if the injection timing, which is obtained by weighting the injection timings of the respective effective injections by the injection amounts and averaging the weighted injection timings, is used.

From the above viewpoint, in the NOx amount calculation control, an average injection timing in which the injection timings and the injection amounts of all the effective injections are reflected is calculated first, as shown in an expression of formula 1 described as follows. In the expression, the main injection timing and the main injection amount respectively represent the injection timing and the injection amount of the main injection, and the after injection timing and the after injection amount respectively represent the injection timing and the injection amount of the after injection. Further, the injection timing is defined as a crank angle at which injection of the fuel is started, and is defined so that an advance side has a negative value, and a delay side has a positive value, with the compression top dead center as a reference, for example.

[Formula 1]

$$\text{Average injection timing} = (((\text{main injection timing} \times \text{main injection amount}) + (\text{after injection timing} \times \text{after injection amount})) / (\text{main injection amount} + \text{after injection amount})) + A$$

In the above described expression, A represents an offset value that is set in accordance with a model, characteristics and the like of the engine, and is set at a positive value. The offset value A functions as a positive offset for preventing the average injection timing from having a negative value, even if the main injection timing has a negative value by being set before the compression top dead center, for example. Further, when the average injection timing of the injection pattern shown in Figure 2 is calculated as a calculation example of the average injection timing, the average injection timing = (main injection timing 5 [CA] $\times$ main injection amount 20 [mm$^3$/st] + after injection timing 15 [CA] $\times$ after injection amount 5 [mm$^3$/st]) / (main injection amount 20 [mm$^3$/st] + after injection amount 5 [mm$^3$/st]) = 7 [CA]. Note that in the above described calculation example, addition of the offset value A is omitted.

Note that in the expression of formula 1 described above and Figure 2, the case in which the main injection and the after injection are each performed once is illustrated. However, the present invention is applied to the case in which the effective injection is executed once or a plurality of times during one cycle, after all the injections that contribute to the combustion in the cylinders including the main injection and the after injection are defined as the effective injections. That is to say, the present invention is not limited by presence or absence and the number of times of injection of the respective main injection and the after injection, but is also applied to a case in which the main injection is executed once and the after injection is not executed, and a case in which the after injection is executed three times or more after execution of the main injection, for example.

Here, with respect to the case in which the effective injection is performed a plurality of times, a method for calculating the average injection timing will be described by being generalized. In this case, a multiplication value of the injection timing and the injection amount is calculated at each of individual injections which constituting a plurality of times of effective injection, and a weighted injection timing which is a result of totaling the multiplication values of all the effective injections is further calculated. Next, a total injection amount which is a result of totaling the injection amounts of all the effective injections is calculated, and the aforementioned weighted injection timing is divided by the total injection amount, whereby the average injection timing can be calculated. Note that the aforementioned weighted injection timing corresponds to a numerator of the expression of formula 1 described above, and the total injection amount corresponds to a denominator of the expression of formula 1. Further, when the effective injection is performed only once during one cycle, the injection timing of the effective injection is directly adopted as the average injection timing.

Next, a specific calculation method of the NOx concentration according to the present embodiment will be described. The NOx concentration [ppm] is calculated by an expression of formula 2 described as follows, based on a plurality of parameters constituted of exponentiation of the intake oxygen concentration [wt%], exponentiation of the average injection timing [CA], exponentiation of the fuel injection amount [mm$^3$/st] and exponentiation of the engine speed [rpm]. A numerator of the expression means a NOx amount [g/g] per unit fuel, and a denominator is a divisor for converting the NOx amount [g/g] into the NOx concentration [ppm].

[Formula 2]

$$\text{NOx concentration} = (e^B \times \text{intake oxygen concentration}^C \times \text{average injection}$$

$$\text{timing}^D \times \text{fuel injection amount}^E \times \text{engine speed}^F) / (10^{-6} \times 1.587 \times (\text{corrected}$$

$$\text{estimated A/F} + 1))$$

In formula 2 described above, the fuel injection amount refers to a total value of the injection amounts of all the effective injections, and in one example shown in Figure 2, the fuel injection amount refers to a value obtained by totaling the main injection amount and the after injection amount. Further, "1.587" in the expression represents a mass ratio that is obtained by dividing the mass of NOx by a mass of exhaust gas, and e represents the base of natural logarithms, respectively. Meanwhile, exponents B, C, D, E, and F of exponentiation are set in accordance with the model, the characteristics and the like of the engine. Next, the corrected estimated A/F, and the intake oxygen concentration, which are used in the above described expression will be described.

(Calculation processing of corrected estimated A/F)

The corrected estimated A/F corresponds to an exhaust air-fuel ratio after characteristic deviations of components which will be described later are corrected. The corrected estimated A/F is calculated by formula 3 described as follows based on a fresh air amount [g/s] and the fuel injection amount [g/s] at a present time point, and the A/F learning correction coefficient which is read from the learning map in accordance with the operation region at the present time point. In the expression, the fuel injection amount means a result of a total value of the injection amounts of all the effective injections being subjected to unit conversion, for example. As above, the corrected estimated A/F is the result of an estimated air-fuel ratio (= the fresh air amount/fuel injection amount) before correction being corrected by being divided by the A/F learning correction coefficient.

[Formula 3]

$$\text{Corrected estimated A/F} = (\text{fresh air amount} / \text{fuel injection amount}) \div (\text{A/F learning}$$

$$\text{correction coefficient})$$

Note that the A/F learning correction coefficient is set by the aforementioned air-fuel ratio leaning control. In the air-fuel ratio learning control, the estimated air-fuel ratio is calculated first by an expression of formula 4 described as follows based on the fresh air amount [g/s] which is detected by the air flow sensor 42 and the fuel injection amount (the injection amount of the effective injection) [g/s] which is set by multistage control. In the next processing, a ratio of the actual detection value by the air-fuel ratio sensor 46 and the aforementioned estimated air-fuel ratio is calculated as the A/F learning correction coefficient by an expression of formula 5 described as follows. The calculation processing is executed for each operation region, and the A/F learning correction coefficient of each of the operation regions is stored in the learning map of the storage circuit 61.

[Formula 4]

$$\text{Estimated air-fuel ratio} = \text{fresh air amount/fuel injection amount}$$

[Formula 5]

$$\text{A/F learning correction coefficient} = \text{estimated air-fuel ratio/actual detection value of air fuel}$$

$$\text{ratio sensor}$$

Output characteristics of the air flow sensor 42 and injection characteristics of the fuel injection valve 14 easily vary due to variation in mass production (individual differences of components), a secular change and the like. The characteristic deviations of components as above become cause of occurrence of an error which causes the estimated air-fuel ratio to deviate from an actual air-fuel ratio. In this regard, the error of the estimated air-fuel ratio is acquired as the A/F learning correction coefficient as shown in formula 5 described above. Accordingly, if the estimated air-fuel ratio is corrected by the expression of formula 3 described above, the error of the estimated air-fuel ratio due to the characteristic deviations of the components can be corrected, and the corrected estimated A/F which is substantially equal to the actual exhaust air-fuel ratio can be accurately calculated. Note that the characteristic deviation of the air-fuel ratio sensor 46 is extremely small as compared with the characteristic deviations of the air flow sensor 42 and the fuel injection valve 14. Therefore, the characteristic deviations of the air flow sensor 42 and the fuel injection valve 14 can be corrected by using the detection value of the air-fuel ratio sensor 46.

(Calculation processing of intake oxygen concentration)

Next, calculation processing of the intake oxygen concentration will be described. The intake oxygen concentration [wt%] is calculated by an expression of formula 6 described as follows, based on the corrected estimated A/F, and an EGR rate [%] that is set by the aforementioned EGR control. In the expression, "23.2" represents an oxygen concentration in air which is known, and "14.6" represents a theoretical air-fuel ratio. Further, the EGR rate is defined as EGR amount/(fresh air amount flowing into cylinders + EGR amount), and can be calculated based on, for example, the engine speed, the intake air amount, the opening degree of the EGR valve 38 and the like.

[Formula 6]

$$\text{Intake oxygen concentration} = 23.2 \times (1 - ((\text{EGR rate} / 100) / (\text{corrected estimated A/F} / 14.6)))$$

According to the expression of formula 6 described above, the intake oxygen concentration also can be corrected by using the corrected estimated A/F, and therefore, even when the characteristic deviations of the components described above occur, the intake oxygen concentration can be accurately calculated. Further, even when the EGR control is executed, an influence of the EGR control can be accurately reflected in the calculation value of the intake oxygen concentration. Thereby, the calculation precision of the NOx concentration can be improved. Note that in a case in which the EGR mechanism 34 is not loaded, and in a case in which the EGR valve 38 is closed, the EGR rate is zero in the expression of formula 6 described above, and therefore, the intake oxygen concentration becomes equal to the oxygen concentration in air. Accordingly, the present embodiment is also applied to these cases.

[Specific processing for realizing embodiment 1]

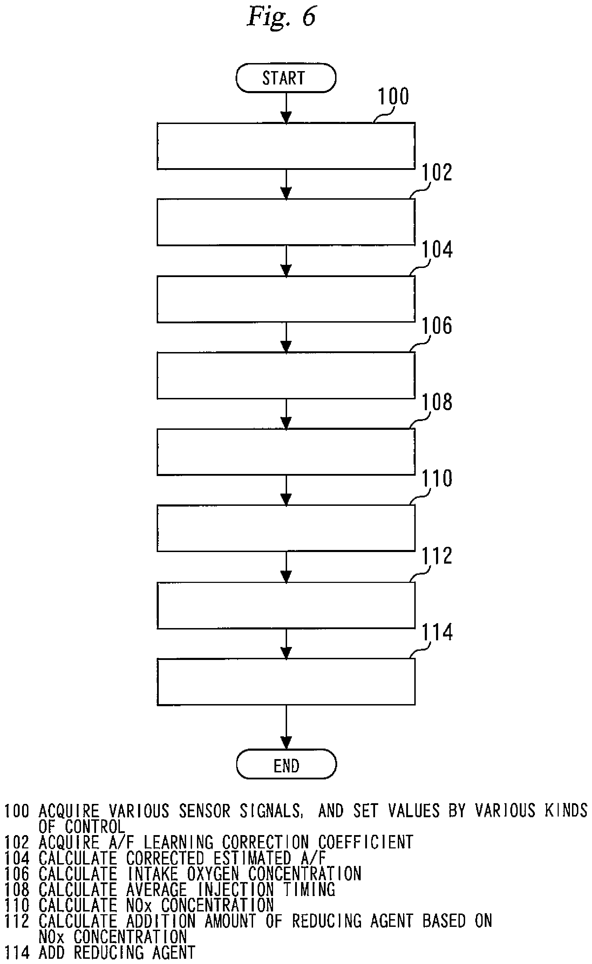

Next, specific processing for realizing the aforementioned control will be described with reference to Figure 6. Figure 6 is a flowchart showing one example of the control which is executed by the ECU in embodiment 1 of the present invention. A routine shown in the drawing is repeatedly executed during an operation of the engine. In the routine shown in Figure 6, various sensor signals, and set values that are set by various kinds of control are acquired first in step 100. Here, the acquired sensor signals include at least the engine speed, the fresh air amount, the EGR rate, the total fuel injection amount, the main injection amount, the main injection timing, the after injection amount, the after injection timing and the like.
Next, in step 102, the A/F learning correction coefficient is acquired by referring to the learning map in accordance with the operation region at the present time point. Subsequently, in step 104, the corrected estimated A/F is calculated by the expression of formula 3 described above, and in step 106, the intake oxygen concentration is calculated by the expression in formula 6 described above. Further in step 108, the average injection timing is calculated by the expression in formula 1 described above. Subsequently, in step 110, the NOx concentration is calculated by the expression in formula 2 described above, based on the above calculation results.
Next, in steps 112 and 114, reducing agent addition control is executed. That is to say, in step 112, an addition amount of the reducing agent to be added to the NOx reduction catalyst 30 is calculated based on the calculation result of the NOx concentration. In the calculation processing, for example, the data map in which a suitable addition amount of the reducing agent is set for each NOx concentration is stored in the storage circuit 61 of the ECU 60 in advance, and the addition amount can be set based on the data map.
Next, in step 114, the reducing agent (fuel) in the amount set in step 112 is added to the NOx reduction catalyst 30, by performing the post injection. Note that in the present embodiment, the case of using the post injection as reducing agent addition means is exemplified as described above, but the present invention is not limited to this, and may adopt a configuration in which an electromagnetic reducing agent addition valve, for example, is installed in the exhaust passage 26, and the reducing agent is added to the catalyst by the reducing agent addition valve. In this case, a urea solution may be used as the reducing agent.

As described in detail above, according to the present embodiment, the configuration which calculates the NOx concentration in the exhaust gas is calculated based on at least two parameters constituted of exponentiation of the injection timing of the effective injection and exponentiation of the intake oxygen concentration is adopted, and therefore, the injection timing of the effective injection which is highly correlated with the generation amount of NOx can be reflected in the calculation value of the NOx concentration. Thereby, the NOx concentration is calculated accurately and stably without being influenced by a machine difference of engines, operation situations and the like, and precision of the control using the calculation value can be improved. Accordingly, in the reducing agent addition control, a suitable amount of reducing agent is added in accordance with the NOx concentration, exhaust emission and fuel efficiency can be improved, and reduction in cost also can be promoted, without using an expensive NOx sensor or the like.

In addition, in the present embodiment, the main injection and the after injection which have an especially large influence on the generation amount of NOx are dealt as the effective injections, and therefore, an error can be restrained from occurring to the calculation value of the NOx concentration depending on the state of the post injection, for example. Further, even when the effective injection is performed a plurality of times, the injection timing is weighted by the injection amount at each of the individual effective injections, whereby the average injection timing in which the injection timings and the injection amounts of all of the effective injections are reflected can be calculated. Thereby, the injection timings of all of the effective injections are properly reflected in the calculation value of the NOx concentration, and the NOx concentration at the time of multistage injection can be accurately calculated. Further, since in the present embodiment, exponentiation of the effective injection amount and exponentiation of the engine speed are also used as the parameters at the time of calculation of the concentration, changes of the injection amount and the engine speed are properly reflected in the calculation value of the NOx concentration, and the calculation precision can be further improved.

Further, in the present embodiment, the corrected estimated A/F is calculated based on the A/F learning correction coefficient which is obtained by the air-fuel ratio leaning control, and the NOx concentration is calculated based on the corrected estimated A/F. Thereby, the characteristic deviations of the air flow sensor 42 and the fuel injection valve 14 can be absorbed by the corrected estimated A/F. Further, at the time of calculation of the intake oxygen concentration, the corrected estimated A/F is used, and therefore, an error can be restrained from occurring to the intake oxygen concentration due to the characteristic deviations of the components. Accordingly, the calculation precision of the NOx concentration can be favorably kept for a long period of time without being influenced by the characteristic deviations of the air flow sensor 42 and the fuel injection valve 14.

In regard to the above, in the prior art, it is not recognized that the correlation exists between the injection timing of the fuel and the NOx amount, and only the effective injection in multistage injection has an influence on the NOx amount, and therefore, it is difficult to always calculate the NOx amount accurately in various operation states. Further, since in the prior art, in the calculation processing of the NOx amount, processing of absorbing the characteristic deviations of the sensor and the actuator is not present, the error easily occurs to the calculation value of the NOx amount due to a machine difference among engines, a secular change and the like, and precision of the control using the NOx amount is easily reduced. According to the present embodiment, the problem of the prior art like this can be solved.

Note that in embodiment 1 described above, Figure 2 shows specific examples of injection control means and multistage injection control means in claims 1, 4 and 12. Further, step 104 in Figure 6 shows a specific example of corrected estimated A/F calculation means in claim 12, step 106 shows a specific example of oxygen concentration acquiring means in claims 1, 2, 3 and 12, and step 110 shows a specific example of NOx amount calculation means in claims 1, 6 to 10 and 12. Further, step 108 shows a specific example of average calculation means in claims 4 and 12, and steps 112 and 114 show a specific example of addition control means in claim 9.

Further, in embodiment 1 described above, the case of dealing the main injection and the after injection as the effective injections is exemplified, but the present invention is not limited to this, and may adopt a configuration that also includes the pilot injection which slightly contributes to combustion in the cylinders and generation of torque in the effective injection. In this case, the average injection timing is calculated by the expression in formula 7 described as follows by using the pilot injection timing and the pilot injection amount which are the injection timing and the injection amount of the pilot injection. Further, a configuration that also includes the pilot injection amount in the fuel injection amount in the expression in formula 2 described above can be adopted. According to the configuration, even when the pilot injection is dealt as the effective injection, the NOx concentration can be accurately calculated as compared with the prior art, and a substantially similar effect to that of embodiment 1 described above can be obtained.

[Formula 7]

Average injection timing = (((main injection timing × main injection amount) + (after injection timing × after injection amount) + (pilot injection timing × pilot injection amount)) / (main injection amount + after injection amount + pilot injection amount)) +A

Further, in embodiment 1 described above, the case of calculating the NOx concentration by using exponentiation of the intake oxygen concentration, exponentiation of the average injection timing, exponentiation of the fuel injection amount and exponentiation of the engine speed is exemplified. However, the present invention is not limited to this, and may adopt a configuration that calculates the NOx concentration by an expression in formula 8 as follows, based on at least two parameters constituted of exponentiation of the intake oxygen concentration, and exponentiation of the average injection timing. According to the configuration, the NOx concentration also can be accurately calculated in response to a change of the injection timing, and an effect substantially similar to the effect of embodiment 1 can be obtained.

[Formula 8]

NOx concentration = (e^B × intake oxygen concentration^C × average injection timing^D) / (10^-6 ×1.587 × (corrected estimated A/F + 1))

Further, in the present invention, a configuration may be adopted, which calculates the NOx concentration by an expression in which only one parameter of exponentiation of the fuel injection amount and exponentiation of the engine speed is added to the expression in formula 8 described above. That is to say, the configuration may be adopted, which calculates the NOx concentration by using the expression in which the numerator of the expression of formula 8 described above is replaced with (e^B × intake oxygen concentration^C × average injection timing^D × fuel injection amount^E), or the aforementioned numerator is replaced with (e^B × intake oxygen concentration^C × average injection timing^D × engine speed^F).

Further, in embodiment 1 described above, the configuration is adopted, which calculates the NOx concentration [ppm] by the expression of formula 2 described above, and uses the calculation result in control is adopted. However, the present invention is not limited to this, and may adopt a configuration that calculates only the numerator of the expression of formula 2 described above as the NOx amount [g/g] per unit fuel, and uses the NOx amount in control.

Embodiment 2

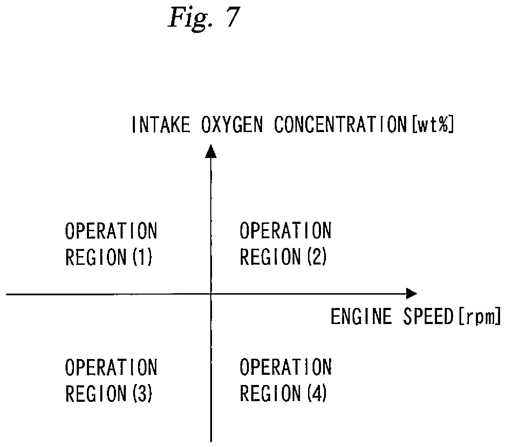

Next, embodiment 2 of the present invention will be described with reference to Figure 7. The present embodiment has a feature of changing the exponents of exponentiation which is used in calculation of the NOx amount for each operation region, in the configuration and the control (Figure 1 and Figure 6) similar to embodiment 1 described above. Note that in the present embodiment, the same components as in embodiment 1 are assigned with the same reference signs, and explanation thereof will be omitted.

[Feature of embodiment 2]

Embodiment 1 described above illustrates the case of setting the offset value A and the exponents B, C, D, E and F of exponentiation, which are included in the expressions in formula 1 and formula 2, in accordance of a machine difference and characteristics of the engine and the like. In regard with this, in the present embodiment, a configuration that changes these values A to F in accordance with the operation state of the engine. Figure 7 is an explanatory diagram for explaining control that changes the exponents of exponentiation to be used in calculation of the NOx concentration for each operation region in embodiment 2. The drawing illustrates a case of changing the offset value A and the exponents B to F of exponentiation for each of four operation regions (1) to (4) that are set based on the engine speed and the aforementioned intake oxygen concentration. Note that Figure 2 shows a specific example of variable exponent means in claim 10.

In the present embodiment which is configured as above, a substantially similar operation effect to the operation effect in embodiment 1 described above can be obtained. Especially in the present embodiment, the offset value A and the exponents B, C, D, E and F of exponentiation which are used in calculation of the NOx concentration can be properly switched each time the operation region changes. Accordingly, the calculated value of the NOx concentration can be also adapted to change of the operation state, and the calculation precision of the concentration can be further improved.

Note that in embodiment 2 described above, the case of dividing the entire operation region of the engine into the four operation regions (1) to (4) which are set based on the engine speed and the aforementioned intake oxygen concentration is illustrated. However, the present invention is not limited to this, and may adopt a configuration that divides the entire operation region into two, three, five or more operation regions, and changes the offset value A and the exponents B to F of exponentiation for each of the individual operation regions. Further, the parameters for setting the operation regions are not limited to the engine speed and the intake oxygen concentration, and optional parameters including, for example, the intake air amount, the fuel injection amount, torque and the like can be used in accordance with necessity.

Further, in the present invention, the offset value A and the exponents B to F of exponentiation do not always have to be changed for each of the operation regions, and a configuration that does not set the operation regions may be adopted. That is to say, the present invention may adopt a configuration that gradually increases and decreases all or some of the offset value A and the exponents B to F of exponentiation, or switches each of these values A to F stepwise, based on optional parameters (the engine speed, the intake air amount, the fuel injection amount, injection timing, torque and the like) in which the operation state of the internal combustion engine is reflected.

Embodiment 3

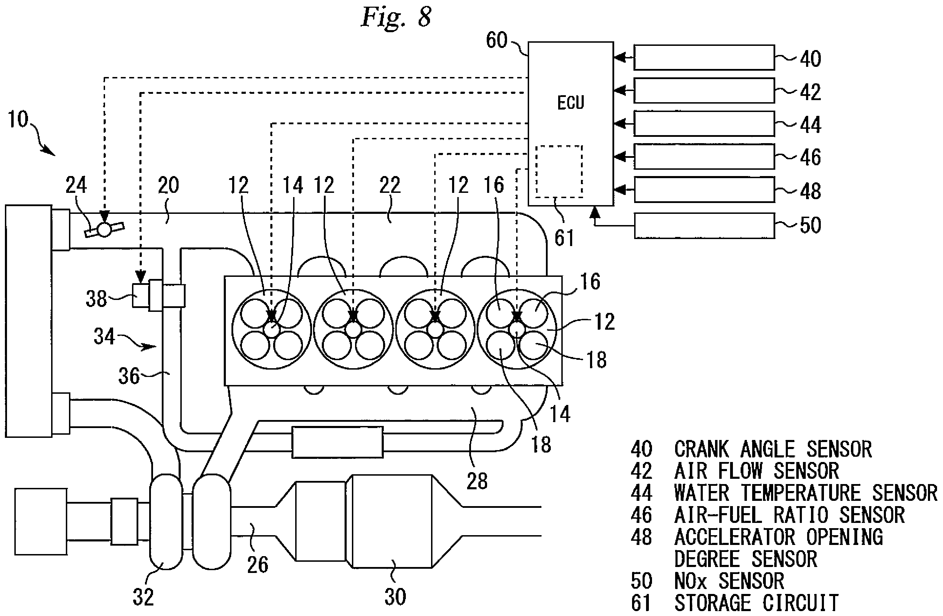

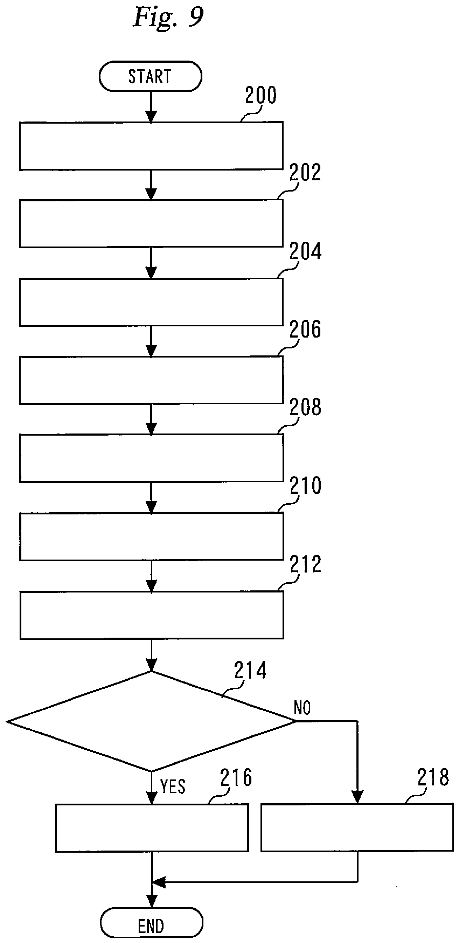

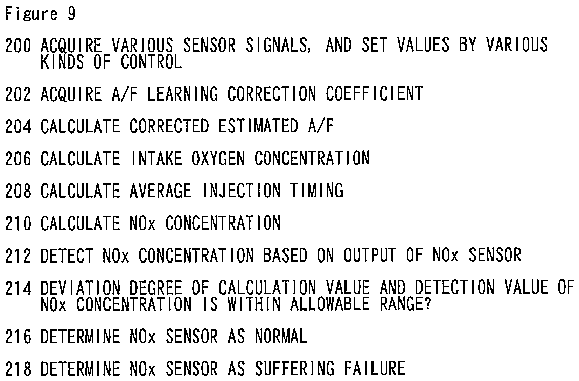

Next, embodiment 3 of the present invention will be described with reference to Figure 8 and Figure 9. The present embodiment has a feature of detecting a failure of the NOx sensor based on the NOx amount which is calculated by the method similar to the method of embodiment 1 described above. Note that in the present embodiment, the same components as in embodiment 1 are assigned with the same reference signs, and explanation thereof will be omitted.

[Feature of embodiment 3]

Figure 8 is an entire configuration diagram for explaining a system configuration of embodiment 3 of the present invention. As shown in the drawing, a system of the present embodiment is configured substantially similarly to the system of embodiment 1, but includes a NOx sensor 50. The NOx sensor 50 detects the NOx amount in exhaust gas that flows into the NOx reduction catalyst 30, and outputs the signal corresponding to the detection result to the ECU 60.

(Failure detection control for NOx sensor)

In the present embodiment, failure detection control for the NOx sensor 50 is executed as shown in Figure 9. Figure 9 is a flowchart showing one example of control that is executed by the ECU in embodiment 3 of the present invention. A routine shown in this drawing is repeatedly executed during an operation of the engine. In the routine shown in Figure 9, in steps 200 to 210, first of all, processing similar to steps 100 to 110 in embodiment 1 described above (Figure 6) is executed, and the NOx concentration in the exhaust gas is calculated.

Next, in step 212, the NOx concentration in the exhaust gas is detected based on an output from the NOx sensor 50. Subsequently, in step 214, it is determined whether or not the NOx sensor 50 fails, based on a deviation degree of the calculation value of the NOx concentration and a detection value of the NOx concentration by the NOx sensor 50. When the determination of step 214 is established, namely, when the deviation degree of the calculation value and the detection value of the NOx concentration is within an allowable range corresponding to a deviation degree at a normal time, the flow shifts to step 216, and the NOx sensor 50 is determined as normal.

Meanwhile, when the determination of step 214 is not established, that is, when the deviation degree of the calculation value and the detection value of the NOx concentration is out of the aforementioned allowable range, the flow shifts to step 218, and the NOx sensor 50 is determined to suffer a failure. In this case, a configuration may be adopted, which informs a user of the failure, for example, by lighting a warning lamp such as MIL and urges the user to replace components of the NOx sensor 50. Further, in this case, a configuration that executes control using the output in a failure mode by ignoring the output from the NOx sensor 50 may be adopted.

Note that in step S214, a difference between the calculation value and the detection value of the NOx concentration is calculated as the aforementioned deviation degree, for example, and when the deviation degree exceeds a determination value corresponding to the aforementioned allowable range, it is determined that the sensor fails. Further, in step 214, a ratio (= the detection value/calculation value) of the calculation value and the detection value of the NOx concentration is calculated as the aforementioned deviation degree, and when the deviation degree is out of the aforementioned allowable range, it may be determined that a failure occurs due to a gain deviation, an offset deviation, zero stack or the like of the sensor output, for example. Further, in step 214, the ratio of the change speed of the calculation value of the NOx concentration and the change speed of the detection value is calculated as the aforementioned deviation degree, and when the deviation degree is out of the aforementioned allowable range, it may be determined that a failure occurs due to worsening of responsiveness or the like of the sensor.

Furthermore, in the present embodiment, determination processing of step S214 may be configured by combining first determination of determining whether or not the difference or the ratio of the calculation value and the detection value of the NOx concentration is within the aforementioned allowable range, and second determination of determining whether or not the ratio of the aforementioned change speeds is within the aforementioned allowable range. Citing a specific example, in step 214, at least one of the aforementioned first determination and the second determination is established, the sensor may be determined as normal, and when both the determinations are not established, the sensor may be determined to suffer a failure.

In the present embodiment which is configured as above, a substantially similar operation effect to the operation effect of embodiment 1 described above also can be obtained. In particular, in the present embodiment, a failure of the NOx sensor 50 can be detected by using the calculation value of the NOx concentration. Thereby, failure detection of the sensor is enabled without adding a special mechanism or the like for failure detection, and therefore reliability of the system can be improved while increase in cost is restrained. Note that in embodiment 3 described above, steps 214, 216 and 218 in Figure 9 show a specific example of sensor failure detection means in claim 12.

Embodiment 4

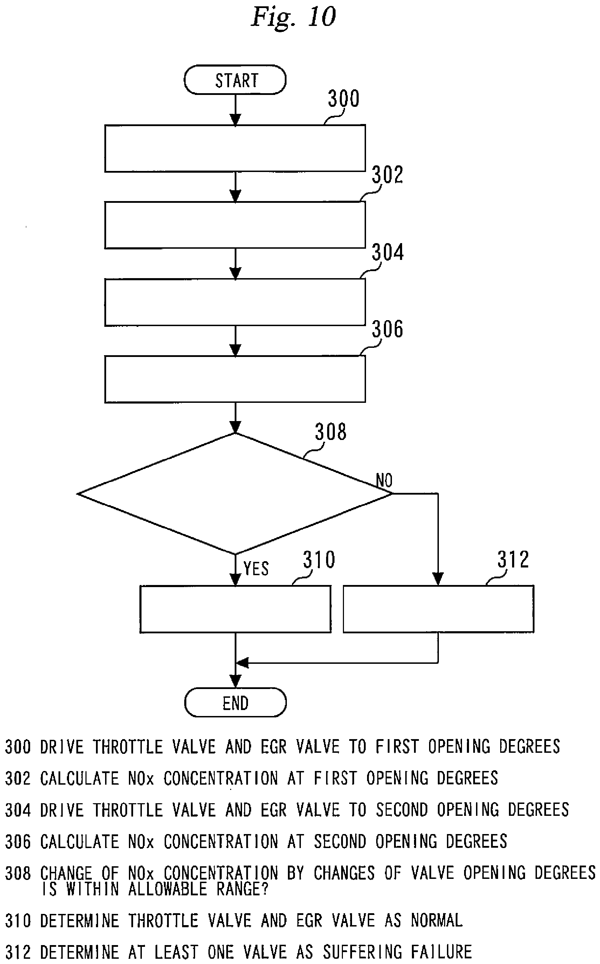

Next, embodiment 4 of the present invention will be described with reference to Figure 10. The present embodiment has a feature of detecting failures of the aforementioned two valves based on a change of the calculation value of the NOx amount that occurs due to changes of valve opening degrees of the throttle valve and the EGR valve in a configuration (Figure 1) similar to the configuration of embodiment 1 described above. Note that in the present embodiment, the same components as in embodiment 1 are assigned with the same reference signs, and explanation thereof will be omitted.

[Feature of embodiment 4]

As shown in Figure 10, in the present embodiment, failure detection control for the throttle valve 24 and the EGR valve 38 is executed. Figure 10 is a flowchart showing one example of control that is executed by the ECU in embodiment 4 of the present invention. A routine shown in the drawing is repeatedly executed during an operation of the engine. In the routine shown in Figure 10, first of all, in step 300, the throttle valve 24 and the EGR valve 38 are driven to first opening degrees that are set in advance, and in step 302, the NOx concentration in the exhaust gas at the first opening degrees is calculated. Here, the first opening degree of the throttle valve 24, and the first opening degree of the EGR valve 38 may be different valve opening degrees. Further, in step 302, the NOx concentration is calculated by similar processing to steps 100 to 110 in embodiment 1 (Figure 6) described above.

Next, in step 304, the throttle valve 24 and the EGR valve 38 are driven to second opening degrees, and in step 306, the NOx concentration at the second opening degrees is calculated similarly to the case of step 302 described above. Here, the second opening degrees are set at valve opening degrees that are different from the aforementioned first opening degrees, in advance. Further, the second opening degree of the throttle valve 24 and the second opening degree of the EGR valve 38 may be different valve opening degrees. Further, the first opening degrees and the second opening degrees may be set at optional valve opening degrees including full closure and full opening, and the difference of both the valve opening degrees is preferably large enough to change the NOx concentration.

Next, in step 308, it is determined whether or not the change of the NOx concentration which occurs due to the changes of the valve opening degrees of the throttle valve 24 and the EGR valve 38 is within the allowable range corresponding to the normal state. When the determination is established, that is, when the change of the NOx concentration is within the allowable range, the NOx concentration changes normally in response to the changes of the valve openings, and therefore, the flow shifts to step 310, where the throttle valve 24 and the EGR valve 38 are determined as normal.

Meanwhile, when the determination of step 308 is not established, that is, when the change of the NOx concentration is out of the aforementioned allowable range, the flow shifts to step 312, and at least one of the throttle valve 24 and the EGR valve 38 is determined to suffer a failure. In this case, lighting of a warning lamp, control in a failure mode and the like may be executed as in the case of embodiment 3 described above.

Note that in step 308, as "the change of the NOx concentration", a difference (a change amount) between the NOx concentration with the first opening degree, and the NOx concentration with the second opening degree may be used, and the change speed of the NOx concentration at the time of the valve opening degree changing from the first opening degree to the second opening degree may be used. Describing more specifically, when the change amount of the NOx concentration is out of the aforementioned allowable range in step 308, it may be determined that a failure occurs due to, for example, sticking of the throttle valve 24 or the EGR valve 38, abnormality of an operation range, leakage at the time of full closure, and the like. Further, when the change speed of the NOx concentration is out of the aforementioned allowable range in step 308, it may be determined that the failure occurs due to worsening of responsiveness of the throttle valve 24 or the EGR valve 38, or the like.

Further, in the present embodiment, the determination processing in step 308 may be configured by combining first determination that determines whether or not the change amount of the NOx concentration is within the aforementioned allowable range, and second determination that determines whether or not the change speed of the NOx concentration is within the aforementioned allowable range. Citing a specific example, in step 308, both of the throttle valve 24 and the EGR valve 38 may be determined as normal, when at least one of the aforementioned first and second determinations is established, and when both of the first and second determinations are not established, at least one of the valves may be determined to suffer a failure.

In the present embodiment which is configured as above, an operation effect substantially similar to the operation effect of embodiment 1 described above also can be obtained. In particular in the present embodiment, failures of the throttle valve 24 and the EGR valve 38 can be detected by using the calculation value of the NOx concentration. Thereby, detection of the failure of the valves is enabled without adding a special mechanism or the like for failure detection, and therefore reliability of the system can be improved while increase in cost is restrained. Note that in embodiment 4 described above, steps 308, 310 and 312 in Figure 10 shows a specific example of valve failure detection means in claim 13.

Note that in embodiments 1 to 4 described above, individual configurations are respectively exemplified.

Reference Signs List

|  |  |
|---|---|
| 10 | Engine (internal combustion engine) |
| 12 | Combustion chamber |
| 14 | Fuel injection valve |
| 16 | Intake valve |
| 18 | Exhaust valve |
| 20 | Intake passage |
| 22 | Intake manifold |
| 24 | Throttle valve |
| 26 | Exhaust passage |
| 28 | Exhaust manifold |
| 30 | NOx reduction catalyst |
| 32 | Turbocharger |
| 34 | EGR mechanism |
| 36 | EGR pipe |
| 38 | EGR valve |
| 40 | Crank angle sensor |
| 42 | Air flow sensor (fresh air amount sensor) |
| 44 | Water temperature sensor |
| 46 | Air-fuel ratio sensor |
| 48 | Accelerator opening degree sensor |
| 50 | NOx sensor |
| 60 | ECU |
| 61 | Storage circuit (Learning storage means) |

**Claims**

1.  A control device for an internal combustion engine, comprising:

> a fuel injection valve (14) that injects fuel into a cylinder (12) of an internal combustion engine;
> injection control means (60) for setting an injection timing of fuel by the fuel injection valve (14);
> oxygen concentration acquiring means (60) for acquiring an oxygen concentration in gas that is taken into the cylinder (12) as an intake oxygen concentration;
> NOx amount calculation means (60) for calculating a NOx amount in exhaust gas, based on at least two parameters comprising exponentiation of an injection timing of an effective injection that is a fuel injection that contributes to combustion in the cylinder (12), and exponentiation of the intake oxygen concentration, wherein the effective injection comprises a main injection and an after injection;

an air flow sensor (42) that detects a fresh air amount that is taken into the cylinder (12);

an air-fuel ratio sensor (46) that detects an exhaust air-fuel ratio; and **characterized by**

learning storage means (60) for calculating an A/F learning correction coefficient that is a ratio of an air-fuel ratio calculated based on an injection amount of the effective injection and the fresh air amount, and a detection value of the air-fuel ratio sensor (46), and storing the A/F learning correction coefficient for each operation region, wherein the NOx amount calculation means (60) is configured to calculate a corrected estimated A/F based on the A/F learning correction coefficient which is read from the learning storage means (60) in accordance with an operation region at a present time point, and calculate the NOx amount based on at least the two parameters and the corrected estimated A/F.

2. A control device for an internal combustion engine, comprising:

a fuel injection valve (14) that injects fuel into a cylinder (12) of an internal combustion engine;

injection control means (60) for setting an injection timing of fuel by the fuel injection valve (14);

oxygen concentration acquiring means (60) for acquiring an oxygen concentration in gas that is taken into the cylinder (12) as an intake oxygen concentration;

NOx amount calculation means (60) for calculating a NOx amount in exhaust gas, based on at least two parameters comprising exponentiation of an injection timing of an effective injection that is a fuel injection that contributes to combustion in the cylinder (12), and exponentiation of the intake oxygen concentration, wherein the effective injection comprises a main injection and an after injection;

an air flow sensor (42) that detects a fresh air amount that is taken into the cylinder (12);

an air-fuel ratio sensor (46) that detects an exhaust air-fuel ratio; and **characterized by**

learning storage means (60) for calculating an A/F learning correction coefficient that is a ratio of an air-fuel ratio calculated based on an injection amount of the effective injection and the fresh air amount, and a detection value of the air-fuel ratio sensor (46), and storing the A/F learning correction coefficient for each operation region, wherein the oxygen concentration acquiring means (60) is configured to use the A/F learning correction coefficient which is read from the learning storage means (60) in accordance with an operation region at a present time point in calculation of the intake oxygen concentration.

3. The control device for an internal combustion engine according to claim 2, further comprising:

an EGR mechanism (34) that recirculates exhaust gas to an intake system,

wherein the oxygen concentration acquiring means (60) is configured to calculate the intake oxygen concentration based on the A/F learning correction coefficient, the fresh air amount and the injection amount of the effective injection, and an EGR rate that is realized by the EGR mechanism.

4. The control device for an internal combustion engine according to any of claims 1 to 3, wherein the injection control means (60) is configured to execute an effective injection a plurality of times during one cycle, the control device further comprising:

average calculation means (60) for calculating an average injection timing by calculating a weighted injection timing obtained by calculating a multiplied value of an injection timing and an injection amount for each of individual effective injections, and totaling the multiplied values of all the effective injections, and dividing the weighted injection timing by a total injection amount obtained by totaling injection amounts of all the effective injections,

wherein the NOx amount calculation means (60) is configured to use exponentiation of the average injection timing as exponentiation of the injection timing of the effective injection.

5. The control device for an internal combustion engine according to any one of claims 1 to 4, wherein the effective injection is a fuel injection that injects fuel during a time period across a compression top dead center or during an expansion stroke and combusts the fuel in the cylinder (12).

6. The control device for an internal combustion engine according to any one of claims 1 to 5, wherein the NOx amount calculation means (60) is configured to calculate the NOx amount, based on a plurality of parameters which are a result of adding exponentiation of the injection amount of the effective injection to the parameters.

**7.** The control device for an internal combustion engine according to any one of claims 1 to 6, wherein the NOx amount calculation means (60) is configured to calculate the NOx amount, based on a plurality of parameters which are a result of adding exponentiation of a speed of the internal combustion engine to the parameters.

**8.** The control device for an internal combustion engine according to any one of claims 1 to 7, further comprising:

variable exponent means (60) for changing exponents of exponentiation of the parameters based on an operation state of the internal combustion engine,

wherein the NOx amount calculation means (60) is configured to calculate the NOx amount by using the exponents set by the variable exponent means (60).

**9.** The control device for an internal combustion engine according to any one of claims 1 to 8, further comprising:

a NOx reduction catalyst (30) that reduces and purifies NOx in exhaust gas;

reducing agent adding means for adding a reducing agent to the NOx reduction catalyst (30); and

addition control means for calculating an addition amount of the reducing agent based on the NOx amount which is calculated by the NOx amount calculation means (60), and operates the reducing agent adding means based on the calculation result.

**10.** The control device for an internal combustion engine according to any one of claims 1 to 8, further comprising:

a NOx reduction catalyst (30) that reduces and purifies NOx in exhaust gas;

a NOx sensor (50) that detects a NOx amount that flows into the NOx reduction catalyst (30); and

sensor failure detection means that detects a failure of the NOx sensor (50), based on a detection value of the NOx amount by the NOx sensor (50) and a calculation value of the NOx amount calculated by the NOx amount calculation means (60).

**11.** The control device for an internal combustion engine according to any one of claims 1 to 10, further comprising:

a throttle valve (24) that regulates a fresh air amount that is taken into the cylinder (12);

an EGR valve (38) that is provided in an EGR passage for recirculating exhaust gas to an intake system, and regulates a recirculation amount of the exhaust gas; and

valve failure detection means for changing valve opening degrees of the throttle valve (24) and the EGR valve (38), and detecting failures of the throttle valve (24) and the EGR valve (38) based on a change of a calculation value of the NOx amount that occurs due to changes of the valve opening degrees.

**12.** A control device for an internal combustion engine, comprising:

a fuel injection valve (14) that injects fuel into a cylinder (12) of an internal combustion engine;

injection control means (60) for setting an injection timing of fuel by the fuel injection valve (14);

oxygen concentration acquiring means (60) for acquiring an oxygen concentration in gas that is taken into the cylinder (12) as an intake oxygen concentration;

NOx amount calculation means (60) for calculating a NOx amount in exhaust gas, based on at least two parameters comprising exponentiation of an injection timing of an effective injection that is a fuel injection that contributes to combustion in the cylinder (12), and exponentiation of the intake oxygen concentration, wherein the effective injection comprises a main injection and an after injection;

an air flow sensor (42) that detects a fresh air amount that is taken into the cylinder (12);

an air-fuel ratio sensor (46) that detects an exhaust air-fuel ratio;

an EGR mechanism (34) that recirculates exhaust gas to an intake system;

multistage injection control means (60) that is configured by including the injection control means (60), and for executing an effective injection that injects fuel and combusts the fuel in the cylinder (12) during a time period across a compression top dead center or during an expansion stroke, a plurality of times during one cycle;

average calculation means (60) for calculating an average injection timing by calculating a weighted injection timing obtained by calculating a multiplied value of an injection timing and an injection amount for each of individual effective injections and totaling the multiplied values of all the effective injections, and dividing the weighted injection timing by a total injection amount obtained by totaling injection amounts of all the effective injections;

learning storage means (60) for calculating an A/F learning correction coefficient that is a ratio of an air-fuel ratio calculated based on an injection amount of the effective injection and the fresh air amount, and a detection value of the air-fuel ratio sensor (46), and storing the A/F learning correction coefficient for each operation region; and

corrected estimated A/F calculation means (60) for calculating a corrected estimated A/F based on the A/F learning correction coefficient which is read from the learning storage means (60) in accordance with an operation region at a present time point, and the fresh air amount and an injection amount of the effective injection at the present time point,

wherein the oxygen concentration acquiring means (60) calculates the intake oxygen concentration based on the corrected estimated A/F, an EGR rate that is realized by the EGR mechanism, an oxygen concentration in air, and a theoretical air-fuel ratio, and

the NOx amount calculation means (60) is configured to calculate a numerator obtained by multiplying exponentiation of the intake oxygen concentration, exponentiation of the average injection timing, exponentiation of a total value obtained by totaling all the injection amounts of the effective injections, and exponentiation of a speed of the internal combustion engine, calculate a denominator by an arithmetic operation of $10^{-6} \times 1.587 \times$ (the corrected estimated A/F + 1) based on the corrected estimated A/F which is read from the learning storage means (60) in accordance with an operation region at the present time point, and calculate a NOx concentration in exhaust gas by dividing the numerator by the denominator.

**Patentansprüche**

1. Steuergerät für einen Verbrennungsmotor, umfassend:

ein Kraftstoffeinspritzventil (14), das Kraftstoff in einen Zylinder (12) eines Verbrennungsmotors einspritzt;
Einspritzsteuerungsmittel (60) zum Festlegen eines Einspritzzeitpunktes von Kraftstoff durch das Kraftstoffeinspritzventil (14);
Sauerstoffkonzentrationserfassungsmittel (60) zum Erfassen einer Sauerstoffkonzentration in Gas, die in den Zylinder (12) als eine Aufnahmesauerstoffkonzentration gebracht wird;
NOx-Mengenberechnungsmittel (60) zum Berechnen einer NOx-Menge in Abgas auf Grundlage von mindestens zwei Parametern, die Potenzierung eines Einspritzzeitpunkts einer effektiven Einspritzung, die eine Kraftstoffeinspritzung ist, die zur Verbrennung in dem Zylinder (12) beiträgt, und Potenzierung der Aufnahmesauerstoffkonzentration umfassen, wobei die effektive Einspritzung eine Haupteinspritzung und eine Nacheinspritzung umfasst;
einen Luftstromsensor (42), der eine Frischluftmenge, die in den Zylinder (12) gebracht wird, ermittelt;
einen Luft-Kraftstoff-Verhältnis-Sensor (46), der ein Abluft-Kraftstoff-Verhältnis ermittelt; und **gekennzeichnet durch**
Lernspeichermittel (60) zum Berechnen eines Luft-Kraftstoff-Verhältnis-Lernkorrekturkoeffizienten, der ein Verhältnis von einem Luft-Kraftstoff-Verhältnis, das auf Grundlage von einer Einspritzmenge der effektiven Einspritzung und der Frischluftmenge berechnet wird, zu einem Erfassungswert des Luft-Kraftstoff-VerhältnisSensors (46) ist, und Speichern des Luft-Kraftstoff-Verhältnis-Lernkorrekturkoeffizienten für jeden Betriebsbereich, wobei das NOx-Mengenberechnungsmittel (60) konfiguriert ist, um ein korrigiertes geschätztes Luft-Kraftstoff-Verhältnis auf Grundlage des Luft-Kraftstoff-Verhältnis-Lernkorrekturkoeffizienten, der aus den Lernspeichermitteln (60) in Übereinstimmung mit einem Betriebsbereich zu einem gegenwärtigen Zeitpunkt gelesen wird, zu berechnen und um die NOx-Menge auf Grundlage von mindestens den zwei Parametern und dem korrigierten geschätzten Luft-Kraftstoff-Verhältnis zu berechnen.

2. Steuergerät für einen Verbrennungsmotor, umfassend:

ein Kraftstoffeinspritzventil (14), das Kraftstoff in einen Zylinder (12) eines Verbrennungsmotors einspritzt;
Einspritzsteuerungsmittel (60) zum Festlegen eines Einspritzzeitpunktes von Kraftstoff durch das Kraftstoffeinspritzventil (14);
Sauerstoffkonzentrationserfassungsmittel (60) zum Erfassen einer Sauerstoffkonzentration in Gas, die in den Zylinder (12) als eine Aufnahmesauerstoffkonzentration gebracht wird;
NOx-Mengenberechnungsmittel (60) zum Berechnen einer NOx-Menge in Abgas auf Grundlage von mindestens zwei Parametern, die Potenzierung eines Einspritzzeitpunkts einer effektiven Einspritzung, die eine Kraftstoffeinspritzung ist, die zur Verbrennung in dem Zylinder (12) beiträgt, und Potenzierung der Aufnahmesauerstoffkonzentration umfassen, wobei die effektive Einspritzung eine Haupteinspritzung und eine Nacheinspritzung umfasst;

einen Luftstromsensor (42), der eine Frischluftmenge, die in den Zylinder (12) gebracht wird, ermittelt;

einen Luft-Kraftstoff-Verhältnis-Sensor (46), der ein Abluft-Kraftstoff-Verhältnis ermittelt; und **gekennzeichnet durch**

Lernspeichermittel (60) zum Berechnen eines Luft-Kraftstoff-Verhältnis-Lernkorrekturkoeffizienten, der ein Verhältnis von einem Luft-Kraftstoff-Verhältnis, das auf Grundlage von einer Einspritzmenge der effektiven Einspritzung und der Frischluftmenge berechnet wird, zu einem Erfassungswert des Luft-Kraftstoff-VerhältnisSensors (46) ist, und Speichern des Luft-Kraftstoff-Verhältnis-Lernkorrekturkoeffizienten für jeden Betriebsbereich, wobei das Sauerstoffkonzentrationserfassungsmittel (60) konfiguriert ist, um den Luft-Kraftstoff-Verhältnis-Lernkorrekturkoeffizienten, der aus den Lernspeichermitteln (60) in Übereinstimmung mit einem Betriebsbereich zu einem gegenwärtigen Zeitpunkt gelesen wird, bei der Berechnung von der Aufnahmesauerstoffkonzentration zu verwenden.

3. Steuergerät für einen Verbrennungsmotor nach Anspruch 2, ferner umfassend:

einen AGR-Mechanismus (34), der Abgas in ein Ansaugsystem rückführt,

wobei das Sauerstoffkonzentrationserfassungsmittel (60) konfiguriert ist, um die Aufnahmesauerstoffkonzentration auf Grundlage des Luft-Kraftstoff-Verhältnis-Lernkorrekturkoeffizienten, der Frischluftmenge und der Einspritzmenge der effektiven Einspritzung, und einer AGR-Rate, die von dem AGR-Mechanismus erkannt wird, zu berechnen.

4. Steuergerät für einen Verbrennungsmotor nach einem der Ansprüche 1 bis 3,

wobei das Einspritzsteuerungsmittel (60) konfiguriert ist, um eine effektive Einspritzung mehrfach während eines Zyklus auszuführen,

wobei das Steuergerät ferner Folgendes umfasst:

Durchschnittsberechnungsmittel (60) zum Berechnen eines Durchschnittseinspritzzeitpunktes durch Berechnen eines gewichteten Einspritzzeitpunktes, der durch Berechnen eines multiplizierten Wertes eines Einspritzzeitpunktes und einer Einspritzmenge für jede von individuellen effektiven Einspritzungen erhalten wird, und Zusammenrechnen der multiplizierten Werte von allen effektiven Einspritzungen und Teilen des gewichteten Einspritzzeitpunktes durch eine gesamte Einspritzmenge, die durch Zusammenrechnen der Einspritzmengen von allen effektiven Einspritzungen erhalten wird,

wobei das NOx-Mengenberechnungsmittel (60) konfiguriert ist, um Potenzierung des Durchschnittseinspritzzeitpunktes als Potenzierung des Einspritzzeitpunktes der effektiven Einspritzung zu verwenden.

5. Steuergerät für einen Verbrennungsmotor nach einem der Ansprüche 1 bis 4,

wobei die effektive Einspritzung eine Kraftstoffeinspritzung ist, die Kraftstoff während eines Zeitraums über einen oberen Verdichtungs-Totpunkt oder während eines Expansionshubes einspritzt und den Kraftstoff in dem Zylinder (12) verbrennt.

6. Steuergerät für einen Verbrennungsmotor nach einem der Ansprüche 1 bis 5, wobei das NOx-Mengenberechnungsmittel (60) konfiguriert ist, um die NOx-Menge zu berechnen, auf Grundlage einer Vielzahl von Parametern, die ein Ergebnis eines Hinzufügens von Potenzierung der Einspritzmenge der effektiven Einspritzung zu den Parametern sind.

7. Steuergerät für einen Verbrennungsmotor nach einem der Ansprüche 1 bis 6,

wobei das NOx-Mengenberechnungsmittel (60) konfiguriert ist, um die NOx-Menge zu berechnen, auf Grundlage einer Vielzahl von Parametern, die ein Ergebnis eines Hinzufügens von Potenzierung einer Geschwindigkeit des Verbrennungsmotors zu den Parametern sind.

8. Steuergerät für einen Verbrennungsmotor nach einem der Ansprüche 1 bis 7, ferner umfassend:

variables Exponentenmittel (60) zum Ändern von Exponenten von Potenzierung der Parameter auf Grundlage eines Betriebszustands des Verbrennungsmotors,

wobei das NOx-Mengenberechnungsmittel (60) konfiguriert ist, um die NOx-Menge unter Verwendung der von den variablen Exponentenmitteln (60) festgelegten Exponenten zu berechnen.

9. Steuergerät für einen Verbrennungsmotor nach einem der Ansprüche 1 bis 8, ferner umfassend:

einen NOx-Reduktionskatalysator (30), der NOx in Abgas reduziert und reinigt;
Zugabemittel für Reduktionsmittel zum Hinzufügen eines Reduktionsmittels zu dem NOx-Reduktionskatalysator (30); und
Zugabesteuermittel zum Berechnen einer Zugabemenge des Reduktionsmittels auf Grundlage der NOx-Menge, die von den NOx-Mengenberechnungsmitteln (60) berechnet wird, und Betreiben des Zugabemittels für Reduktionsmittel auf Grundlage des Berechnungsergebnisses.

10. Steuergerät für einen Verbrennungsmotor nach einem der Ansprüche 1 bis 8, ferner umfassend:

einen NOx-Reduktionskatalysator (30), der NOx in Abgas reduziert und reinigt;
einen NOx-Sensor (50), der eine NOx-Menge, die in den NOx-Reduktionskatalysator (30) strömt, ermittelt; und
Sensorausfallerkennungsmittel, das einen Ausfall des NOx-Sensors (50) auf Grundlage eines Erfassungswertes der NOx-Menge durch den NOx-Sensor (50) und eines Berechnungswertes der NOx-Menge, der von dem NOx-Mengenberechnungsmittel (60) berechnet wird, ermittelt.

11. Steuergerät für einen Verbrennungsmotor nach einem der Ansprüche 1 bis 10, ferner umfassend:

ein Drosselventil (24), das eine Frischluftmenge, die in den Zylinder (12) gebracht wird, reguliert;
ein AGR-Ventil (38), das in einem AGR-Durchgang bereitgestellt ist, um Abgas in ein Ansaugsystem rückzuführen, und das eine Rückführungsmenge des Abgases reguliert; und
Ventilausfallerkennungsmittel zum Ändern von Ventilöffnungsgraden des Drosselventils (24) und des AGR-Ventils (38) und Ermitteln von Ausfällen des Drosselventils (24) und des AGR-Ventils (38) auf Grundlage einer Änderung eines Berechnungswertes der NOx-Menge, die aufgrund von Änderungen der Ventilöffnungsgrade auftritt.

12. Steuergerät für einen Verbrennungsmotor, umfassend:

ein Kraftstoffeinspritzventil (14), das Kraftstoff in einen Zylinder (12) eines Verbrennungsmotors einspritzt;
Einspritzsteuerungsmittel (60) zum Festlegen eines Einspritzzeitpunktes von Kraftstoff durch das Kraftstoffeinspritzventil (14);
Sauerstoffkonzentrationserfassungsmittel (60) zum Erfassen einer Sauerstoffkonzentration in Gas, die in den Zylinder (12) als eine Aufnahmesauerstoffkonzentration gebracht wird;
NOx-Mengenberechnungsmittel (60) zum Berechnen einer NOx-Menge in Abgas auf Grundlage von mindestens zwei Parametern, die Potenzierung eines Einspritzzeitpunktes einer effektiven Einspritzung, die eine Kraftstoffeinspritzung ist, die zur Verbrennung in dem Zylinder (12) beiträgt, und Potenzierung der Aufnahmesauerstoffkonzentration umfassen, wobei die effektive Einspritzung eine Haupteinspritzung und eine Nacheinspritzung umfasst;
einen Luftstromsensor (42), der eine Frischluftmenge, die in den Zylinder (12) gebracht wird, ermittelt;
einen Luft-Kraftstoff-Verhältnis-Sensor (46), der ein Abluft-Kraftstoff-Verhältnis ermittelt;
einen AGR-Mechanismus (34), der Abgas in ein Ansaugsystem rückführt;
Mehrstufeneinspritzsteuerungsmittel (60), das durch
Beinhalten des Einspritzsteuerungsmittels (60) und zum Ausführen einer effektiven Einspritzung, die Kraftstoff einspritzt und den Kraftstoff in dem Zylinder (12) verbrennt während eines Zeitraums über einen oberen Verdichtungs-Totpunkt oder während eines Expansionshubes, mehrfach während eines Zyklus konfiguriert ist;
Durchschnittsberechnungsmittel (60) zum Berechnen eines Durchschnittseinspritzzeitpunktes durch Berechnen eines gewichteten Einspritzzeitpunktes, der durch Berechnen eines multiplizierten Wertes eines Einspritzzeitpunktes und einer Einspritzmenge für jede von individuellen effektiven Einspritzungen erhalten wird, und Zusammenrechnen der multiplizierten Werte von allen effektiven Einspritzungen und Teilen des gewichteten Einspritzzeitpunktes durch eine gesamte Einspritzmenge, die durch Zusammenrechnen der Einspritzmengen von allen effektiven Einspritzungen erhalten wird;
Lernspeichermittel (60) zum Berechnen eines Luft-Kraftstoff-Verhältnis-Lernkorrekturkoeffizienten, der ein Verhältnis von einem Luft-Kraftstoff-Verhältnis, das auf Grundlage von einer Einspritzmenge der effektiven Einspritzung und der Frischluftmenge berechnet wird, zu einem Erfassungswert des Luft-Kraftstoff-VerhältnisSensors (46) ist, und Speichern des Luft-Kraftstoff-Verhältnis-Lernkorrekturkoeffizienten für jeden Betriebsbereich; und
korrigiertes geschätztes Luft-Kraftstoff-Verhältnis-Berechnungsmittel (60) zum Berechnen eines korrigierten geschätzten Luft-Kraftstoff-Verhältnisses auf Grundlage des Luft-Kraftstoff-Verhältnis-Lernkorrekturkoeffizienten, der aus den Lernspeichermitteln (60) in Übereinstimmung mit einem Betriebsbereich zu einem gegenwärtigen Zeitpunkt gelesen wird, und der Frischluftmenge und einer Einspritzmenge der effektiven Einspritzung zu dem gegenwärtigen Zeitpunkt,

wobei das Sauerstoffkonzentrationserfassungsmittel (60) die Aufnahmesauerstoffkonzentration auf Grundlage des korrigierten geschätzten Luft-Kraftstoff-Verhältnisses, einer AGR-Rate, die von dem AGR-Mechanismus erkannt wird, einer Sauerstoffkonzentration in Luft und einem theoretischen Luft-Kraftstoff-Verhältnis berechnet und

das NOx-Mengenberechnungsmittel (60) konfiguriert ist, um einen Zähler zu berechnen, der durch Multiplizieren von Potenzierung der Aufnahmesauerstoffkonzentration, Potenzierung des Durchschnittseinspritzzeitpunktes, Potenzierung eines Gesamtwerts, der durch Zusammenrechnen aller Einspritzmengen der effektiven Einspritzungen erhalten wird, und Potenzierung einer Geschwindigkeit des Verbrennungsmotors erhalten wird, um einen Nenner mittels einer arithmetischen Operation von $10^{-6} \times 1,587 \times$ (das korrigierte geschätzte Luft-Kraftstoff-Verhältnis + 1) auf Grundlage des korrigierten geschätzten Luft-Kraftstoff-Verhältnisses, das aus den Lemspeichermitteln (60) in Übereinstimmung mit einem Betriebsbereich zu einem gegenwärtigen Zeitpunkt gelesen wird, zu berechnen, und um eine NOx-Konzentration in Abgas durch Teilen des Zählers durch den Nenner zu berechnen.

## Revendications

1. Dispositif de commande pour un moteur à combustion interne, comprenant :

une vanne d'injection de carburant (14) qui injecte du carburant dans un cylindre (12) d'un moteur à combustion interne ;
un moyen de commande d'injection (60) destiné à définir un moment d'injection de carburant par la vanne d'injection de carburant (14) ;
un moyen d'acquisition de concentration en oxygène (60) destiné à acquérir une concentration en oxygène dans un gaz qui est aspiré dans le cylindre (12) comme concentration en oxygène d'admission ;
un moyen de calcul de quantité de NOx (60) destiné à calculer une quantité de NOx dans un gaz d'échappement, en fonction d'au moins deux paramètres comprenant une exponentiation d'un calage d'injection d'une injection efficace qui est une injection de carburant qui contribue à la combustion dans le cylindre (12), et une exponentiation de la concentration en oxygène d'admission, l'injection efficace comprenant une injection principale et une post-injection ;
un capteur de flux d'air (42) qui détecte une quantité d'air frais qui est aspiré dans le cylindre (12) ;
un capteur de rapport air-carburant (46) qui détecte un rapport d'échappement air-carburant ; et **caractérisé par**
un moyen de stockage d'apprentissage (60) destiné à calculer un coefficient de correction d'apprentissage A/F qui est un rapport d'un rapport air-carburant calculé en fonction d'une quantité d'injection de l'injection efficace et de la quantité d'air frais, et une valeur de détection du capteur de rapport air-carburant (46), et stocker le coefficient de correction d'apprentissage A/F pour chaque zone d'opération,
le moyen de calcul de quantité de NOx (60) étant conçu pour calculer un A/F estimé corrigé en fonction du coefficient de correction d'apprentissage A/F qui est lu à partir du moyen de stockage d'apprentissage (60) conformément à une zone d'opération à un moment présent, et calculer la quantité de NOx en fonction en moins des deux paramètres et du A/F estimé corrigé.

2. Dispositif de commande pour un moteur à combustion interne, comprenant :

une vanne d'injection de carburant (14) qui injecte du carburant dans un cylindre (12) d'un moteur à combustion interne ;
un moyen de commande d'injection (60) destiné à définir un calage d'injection de carburant par la vanne d'injection de carburant (14) ;
un moyen d'acquisition de concentration en oxygène (60) destiné à acquérir une concentration en oxygène dans un gaz qui est aspiré dans le cylindre (12) comme concentration en oxygène d'admission ;
un moyen de calcul de quantité de NOx (60) destiné à calculer une quantité de NOx dans un gaz d'échappement, en fonction d'au moins deux paramètres comprenant une exponentiation d'un calage d'injection d'une injection efficace qui est une injection de carburant qui contribue à la combustion dans le cylindre (12), et une exponentiation de la concentration en oxygène d'admission, l'injection efficace comprenant une injection principale et une post-injection ;
un capteur de flux d'air (42) qui détecte une quantité d'air frais qui est aspiré dans le cylindre (12) ;
un capteur de rapport air-carburant (46) qui détecte un rapport d'échappement air-carburant ; et **caractérisé par**

un moyen de stockage d'apprentissage (60) destiné à calculer un coefficient de correction d'apprentissage A/F qui est un rapport d'un rapport air-carburant calculé en fonction d'une quantité d'injection de l'injection efficace et de la quantité d'air frais, et une valeur de détection du capteur de rapport air-carburant (46), et stocker le coefficient de correction d'apprentissage A/F pour chaque zone d'opération,

le moyen d'acquisition de concentration en oxygène (60) étant conçu pour utiliser le coefficient de correction d'apprentissage A/F qui est lu à partir du moyen de stockage d'apprentissage (60) conformément à une zone d'opération à un moment présent dans le calcul de la concentration en oxygène d'admission.

3. Dispositif de commande pour un moteur à combustion interne selon la revendication 2, comprenant en outre :

un mécanisme de RGE (34) qui fait recirculer le gaz d'échappement vers un système d'admission,

le moyen d'acquisition de concentration en oxygène (60) étant conçu pour calculer la concentration en oxygène d'admission en fonction du coefficient de correction d'apprentissage A/F, la quantité d'air frais et la quantité d'injection de l'injection efficace et un taux de RGE qui est réalisé par le mécanisme de RGE.

4. Dispositif de commande pour un moteur à combustion interne selon l'une quelconque des revendications 1 à 3, dans lequel le moyen de commande d'injection (60) est conçu pour effectuer une injection efficace d'une pluralité de fois pendant un cycle,

le dispositif de commande comprenant en outre :

un moyen de calcul moyen (60) destiné à calculer un calage d'injection moyen par le calcul d'un calage d'injection pondéré obtenu par le calcul d'une valeur multipliée d'un calage d'injection et d'une quantité d'injection pour chacune des injections efficaces individuelles, et additionner les valeurs multipliées de toutes les injections efficaces, et diviser le calage d'injection pondéré par une quantité d'injection totale obtenue par l'addition de quantités d'injection de toutes les injections efficaces,

le moyen de calcul de quantité de NOx (60) étant conçu pour utiliser une exponentiation du calage d'injection moyen comme exponentiation du calage d'injection de l'injection efficace.

5. Dispositif de commande pour un moteur à combustion interne selon l'une quelconque des revendications 1 à 4, dans lequel l'injection efficace est une injection de carburant qui injecte un carburant pendant une période de temps sur un point mort haut de compression ou pendant une course de détente et brûle le carburant dans le cylindre (12).

6. Dispositif de commande pour un moteur à combustion interne selon l'une quelconque des revendications 1 à 5, dans lequel le moyen de calcul de quantité de NOx (60) est conçu pour calculer la quantité de NOx, en fonction d'une pluralité de paramètres qui résultent de l'addition d'exponentiation de la quantité d'injection de l'injection efficace aux paramètres.

7. Dispositif de commande pour un moteur à combustion interne selon l'une quelconque des revendications 1 à 6, dans lequel le moyen de calcul de quantité de NOx (60) est conçu pour calculer la quantité de NOx, en fonction d'une pluralité de paramètres qui sont résultent de l'addition d'exponentiation d'une vitesse du moteur à combustion interne aux paramètres.

8. Dispositif de commande pour un moteur à combustion interne selon l'une quelconque des revendications 1 à 7, comprenant en outre :

un moyen d'exposant variable (60) destiné à changer des exposants d'une exponentiation des paramètres en fonction d'un état d'opération du moteur à combustion interne,

le moyen de calcul de quantité de NOx (60) étant conçu pour calculer la quantité de NOx à l'aide des exposants définis par le moyen d'exposant variable (60).

9. Dispositif de commande pour un moteur à combustion interne selon l'une quelconque des revendications 1 à 8, comprenant en outre :

un catalyseur de réduction des NOx (30) qui réduit et purifie les NOx dans un gaz d'échappement ;

un moyen d'addition d'agent réducteur destiné à ajouter un agent réducteur au catalyseur de réduction des NOx (30) ; et

un moyen de commande d'addition destiné à calculer une quantité d'addition de l'agent réducteur en fonction de la quantité de NOx qui est calculée par le moyen de calcul de quantité de NOx (60), et actionne le moyen d'addition d'agent réducteur en fonction du résultat de calcul.

10. Dispositif de commande pour un moteur à combustion interne selon l'une quelconque des revendications 1 à 8, comprenant en outre :

un catalyseur de réduction des NOx (30) qui réduit et purifie les NOx dans un gaz d'échappement ;
un capteur de NOx (50) qui détecte une quantité de NOx qui s'écoule dans le catalyseur de réduction des NOx (30) ; et
un moyen de détection d'échec de capteur qui détecte un échec du capteur de NOx (50), en fonction d'une valeur de détection de la quantité de NOx par le capteur de NOx (50) et d'une valeur de calcul de la quantité de NOx calculée par le moyen de calcul de quantité de NOx (60).

11. Dispositif de commande pour un moteur à combustion interne selon l'une quelconque des revendications 1 à 10, comprenant en outre :

une vanne d'étranglement (24) qui régule une quantité d'air frais qui est aspiré dans le cylindre (12) ;
une vanne de RGE (38) qui est disposée dans un passage de RGE destiné à faire recirculer un gaz d'échappement vers un système d'admission, et régule une quantité de recirculation du gaz d'échappement ; et
un moyen de détection d'échec de vanne destiné à changer des degrés d'ouverture de vanne de la vanne d'étranglement (24) et de la vanne de RGE (38), et détecter des échecs de la vanne d'étranglement (24) et de la vanne de RGE (38) en fonction d'un changement d'une valeur de calcul de la quantité de NOx qui se produit en raison de changements des degrés d'ouverture de vanne.

12. Dispositif de commande pour un moteur à combustion interne, comprenant :

une vanne d'injection de carburant (14) qui injecte du carburant dans un cylindre (12) d'un moteur à combustion interne ;
un moyen de commande d'injection (60) destiné à définir un calage d'injection de carburant par la vanne d'injection de carburant (14) ;
un moyen d'acquisition de concentration en oxygène (60) destiné à acquérir une concentration en oxygène dans un gaz qui est aspiré dans le cylindre (12) comme concentration en oxygène d'admission ;
un moyen de calcul de quantité de NOx (60) destiné à calculer une quantité de NOx dans un gaz d'échappement, en fonction d'au moins deux paramètres comprenant une exponentiation d'un calage d'injection d'une injection efficace qui est une injection de carburant qui contribue à la combustion dans le cylindre (12), et une exponentiation de la concentration en oxygène d'admission, l'injection efficace comprenant une injection principale et une post-injection ;
un capteur de flux d'air (42) qui détecte une quantité d'air frais qui est aspiré dans le cylindre (12) ;
un capteur de rapport air-carburant (46) qui détecte un rapport d'échappement air-carburant ;
un mécanisme de RGE (34) qui fait recirculer un gaz d'échappement vers un système d'admission ;
un moyen de commande d'injection multi-étage (60) qui est configuré par le fait d'inclure le moyen de commande d'injection (60), et destiné à effectuer une injection efficace qui injecte le carburant et brûle le carburant dans le cylindre (12) pendant une période de temps sur un point mort haut de compression ou pendant une course de détente, une pluralité de fois pendant un cycle ;
un moyen de calcul moyen (60) destiné à calculer un calage d'injection moyen par le calcul d'un calage d'injection pondéré obtenu par le calcul d'une valeur multipliée d'un calage d'injection et d'une quantité d'injection pour chacune des injections efficaces individuelles et additionner les valeurs multipliées de toutes les injections efficaces, et diviser le calage d'injection pondéré par une quantité d'injection totale obtenue par l'addition de quantités d'injection de toutes les injections efficaces ;
un moyen de stockage d'apprentissage (60) destiné à calculer un coefficient de correction d'apprentissage A/F qui est un rapport d'un rapport air-carburant calculé en fonction d'une quantité d'injection de l'injection efficace et de la quantité d'air frais, et une valeur de détection du capteur de rapport air-carburant (46), et stocker le coefficient de correction d'apprentissage A/F pour chaque zone d'opération ; et
un moyen de calcul A/F estimé corrigé (60) destiné à calculer un A/F estimé corrigé en fonction du coefficient de correction d'apprentissage A/F qui est lu à partir du moyen de stockage d'apprentissage (60) conformément à une zone d'opération à un moment présent, et la quantité d'air frais et une quantité d'injection de l'injection efficace au moment présent,
le moyen d'acquisition de concentration en oxygène (60) calculant la concentration en oxygène d'admission en fonction de l'A/F estimé corrigé, un taux de RGE qui est réalisé par le mécanisme de RGE, une concentration en oxygène dans l'air et un rapport théorique air-carburant, et

le moyen de calcul de quantité de NOx (60) étant conçu pour calculer un numérateur obtenu par la multiplication d'une exponentiation de la concentration en oxygène d'admission, une exponentiation du calage d'injection moyen, une exponentiation d'une valeur totale obtenue par l'addition de toutes les quantités d'injection des injections efficaces, et une exponentiation d'une vitesse du moteur à combustion interne, calculer un dénominateur par une opération arithmétique de $10^{-6}$ x 1,587 x (1'A/F estimé corrigé + 1) en fonction de l'A/F estimé corrigé qui est lu à partir du moyen de stockage d'apprentissage (60) conformément à une zone d'opération au moment présent, et calculer une concentration en NOx dans un gaz d'échappement par la division du numérateur par le dénominateur.

*Fig. 1*

40    CRANK ANGLE SENSOR
42    AIR FLOW SENSOR
44    WATER TEMPERATURE SENSOR
46    AIR-FUEL RATIO SENSOR
48    ACCELERATOR OPENING
       DEGREE SENSOR
61    STORAGE CIRCUIT

EP 2 921 682 B1

## Fig. 2

## Fig. 3

*Fig. 4*

IMAGE OF CYLINDER CAPACITY

*Fig. 5*

IMAGE OF NOx CONCENTRATION

## *Fig. 6*

```
        ┌─────────────┐
        │    START    │
        └──────┬──────┘
               │
        ┌──────▼──────┐ 100
        │             │
        └──────┬──────┘
               │
        ┌──────▼──────┐ 102
        │             │
        └──────┬──────┘
               │
        ┌──────▼──────┐ 104
        │             │
        └──────┬──────┘
               │
        ┌──────▼──────┐ 106
        │             │
        └──────┬──────┘
               │
        ┌──────▼──────┐ 108
        │             │
        └──────┬──────┘
               │
        ┌──────▼──────┐ 110
        │             │
        └──────┬──────┘
               │
        ┌──────▼──────┐ 112
        │             │
        └──────┬──────┘
               │
        ┌──────▼──────┐ 114
        │             │
        └──────┬──────┘
               │
        ┌──────▼──────┐
        │     END     │
        └─────────────┘
```

100 ACQUIRE VARIOUS SENSOR SIGNALS, AND SET VALUES BY VARIOUS KINDS
    OF CONTROL
102 ACQUIRE A/F LEARNING CORRECTION COEFFICIENT
104 CALCULATE CORRECTED ESTIMATED A/F
106 CALCULATE INTAKE OXYGEN CONCENTRATION
108 CALCULATE AVERAGE INJECTION TIMING
110 CALCULATE NOx CONCENTRATION
112 CALCULATE ADDITION AMOUNT OF REDUCING AGENT BASED ON
    NOx CONCENTRATION
114 ADD REDUCING AGENT

*Fig. 7*

INTAKE OXYGEN CONCENTRATION [wt%]

OPERATION
REGION (1)

OPERATION
REGION (2)

ENGINE SPEED [rpm]

OPERATION
REGION (3)

OPERATION
REGION (4)

*Fig. 8*

40 CRANK ANGLE SENSOR
42 AIR FLOW SENSOR
44 WATER TEMPERATURE SENSOR
46 AIR-FUEL RATIO SENSOR
48 ACCELERATOR OPENING
   DEGREE SENSOR
50 NOx SENSOR
61 STORAGE CIRCUIT

EP 2 921 682 B1

## *Fig. 9*

START

200

202

204

206

208

210

212

214

NO

YES  216

218

END

Figure 9

200 ACQUIRE VARIOUS SENSOR SIGNALS, AND SET VALUES BY VARIOUS KINDS OF CONTROL

202 ACQUIRE A/F LEARNING CORRECTION COEFFICIENT

204 CALCULATE CORRECTED ESTIMATED A/F

206 CALCULATE INTAKE OXYGEN CONCENTRATION

208 CALCULATE AVERAGE INJECTION TIMING

210 CALCULATE NOx CONCENTRATION

212 DETECT NOx CONCENTRATION BASED ON OUTPUT OF NOx SENSOR

214 DEVIATION DEGREE OF CALCULATION VALUE AND DETECTION VALUE OF NOx CONCENTRATION IS WITHIN ALLOWABLE RANGE?

216 DETERMINE NOx SENSOR AS NORMAL

218 DETERMINE NOx SENSOR AS SUFFERING FAILURE

## *Fig. 10*

```
         ┌─────────┐
         │  START  │
         └────┬────┘
              │
      ┌───────▼───────────┐ 300
      │                   │
      └───────┬───────────┘
              │             302
      ┌───────▼───────────┐
      │                   │
      └───────┬───────────┘
              │             304
      ┌───────▼───────────┐
      │                   │
      └───────┬───────────┘
              │             306
      ┌───────▼───────────┐
      │                   │
      └───────┬───────────┘
              │
              │         308
         ◇───────────────◇ NO
        ◇                 ◇────┐
         ◇───────────────◇    │
              │ YES            │
              │    310         │    312
      ┌───────▼───────┐  ┌─────▼──────┐
      │               │  │            │
      └───────┬───────┘  └─────┬──────┘
              │◄───────────────┘
         ┌────▼────┐
         │   END   │
         └─────────┘
```

300 DRIVE THROTTLE VALVE AND EGR VALVE TO FIRST OPENING DEGREES

302 CALCULATE NOx CONCENTRATION AT FIRST OPENING DEGREES

304 DRIVE THROTTLE VALVE AND EGR VALVE TO SECOND OPENING DEGREES

306 CALCULATE NOx CONCENTRATION AT SECOND OPENING DEGREES

308 CHANGE OF NOx CONCENTRATION BY CHANGES OF VALVE OPENING DEGREES IS WITHIN ALLOWABLE RANGE?

310 DETERMINE THROTTLE VALVE AND EGR VALVE AS NORMAL

312 DETERMINE AT LEAST ONE VALVE AS SUFFERING FAILURE

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139984 A
- JP 2009133285 A
- JP 2005264731 A
- JP 10252573 A
- DE 102011109914